# EUROPÄISCHE PATENTSCHRIFT

(11) **EP 0 583 707 B1**
(45) Veröffentlichungstag und Bekanntmachung des Hinweises auf die Patenterteilung: **20.03.1996**
(21) Anmeldenummer: 93112638.7
(22) Anmeldetag: 06.08.1993
(51) Int. Cl.: F16L 19/06, F16L 19/08, F16L 47/04

(54) **Klemmverschraubung für längliche Körper, insbesondere für Rohre, Kabel, Schläuche oder dergleichen**
Threaded clamp for elongated objects, especially for pipes, cables, hoses or the like
Collier de serrage fileté pour des objets allongés, en particulier pour des tuyaux, cables, tuyaux souples ou analogues

(30) Priorität: 17.08.1992 DE 4227080
(43) Veröffentlichungstag der Anmeldung: 23.02.1994
(73) Patentinhaber: Anton Hummel Verwaltungs-GmbH, D-79183 Waldkirch (DE)
(72) Erfinder: Gehring, Peter, D-7809 Simonswald (DE)
(74) Vertreter: Schmitt, Hans, Dipl.-Ing.

(56) Entgegenhaltungen:
- WO-A-89/07220
- GB-A- 1 547 489
- GB-A- 2 072 780
- US-A- 2 779 610

## Beschreibung

Die Erfindung betrifft ein Verfahren zur Herstellung eines mehrere am Umfang verteilt angeordnete Axialschlitze aufweisenden Klemmringes für Klemmverschraubung für längliche Körper, insbesondere für Rohren, Kabel, Schläuche oder dergleichen, welche Klemmverschraubung eine auf ein Gegengewinde eines Gegenstückes, zum Beispiel eines Gewindenippels oder -stutzen passende Schraubhülse oder Überwurfmutter und den durch die Verschraubung an den länglichen Körper anpreßbaren Klemmring aus Metall oder hartem Kunststoff aufweist.

Die Erfindung betrifft ferner einen Klemmring, der nach dem Verfahren hergestellt ist.

Es sind bereits unterschiedlichste Klemmringe für Klemmverschraubungen bekannt. Falls diese aus relativ weichem Kunststoff bestehen, können sie im Spritzgießverfahren hergestellt werden. Sollen sie jedoch aus Metall oder hartem Kunststoff bestehen, müssen sie bisher in aufwendiger Weise durch Fräsen und Bohren hergestellt werden, wobei die Schlitze zwischen den einzelnen Klemmfingern durch mehrere Fräsvorgänge zwischen diesen Klemmfingern gebildet werden. Dies stellt auch bei großen Stückzahlen eine sehr aufwendige Verfahrensweise dar, bei welcher außerdem ein hoher Anteil an Spänen, also Abfall, anfällt.

Der Erfindung liegt deshalb die Aufgabe zugrunde, ein Verfahren der eingangs erwähnten Art zu schaffen, mit welchem insbesondere über einem großen Durchmesserbereich verformbare und zusammendrückbare Klemmringe rationell, preiswert und dennoch präzise gefertigt werden können.

Die Lösung dieser Aufgabe besteht darin, daß an einem Profilstab, Profilrohr oder Profilrohling mit axial verlaufenden Nuten im Bereich der Stirnseite durch Aufbohren, Auffräsen oder Ausdrehen über einen Teil der axialen Erstreckung des Klemmringes und in radialer Richtung über den Nutengrund hinaus die durch die Längsnuten gebildeten, axial verlaufenden Rippen zu voneinander getrennten Klemmfingern gemacht werden.

Durch die Verwendung eines Profilstabes, Profilrohres oder sonstigen Profilrohlings, ist also bereits ein erheblicher Teil des herzustellenden Klemmringes gewissermaßen vorgefertigt, so daß nur noch ein Ausbohren oder Ausfräsen dieses Rohlinges, Stabes oder Rohres in der Weise erforderlich ist, daß die Rippen nicht mehr durch einen Nutengrund verbunden sind. Somit befinden sich nach diesem Vorgang Schlitze zwischen Ihnen, das heißt die ehemaligen Rippen sind in erwünschter Weise einzelne Klemmfinger, die bei einem Klemmring in bekannter Weise zum Beispiel durch eine Überwurfmutter oder dergleichen zusammengedrückt und dadurch an einen länglichen Körper angepreßt werden können.

Es ist also möglich, Klemmringe von einem durchgehenden Profil oder Stab ausgehend zu fertigen, statt jeden Klemmring in einem aufwendigen Zerspanungsverfahren einzeln herzustellen.

Dies erlaubt auch eine weitgehend automatisierte Fertigung mit großen Stückzahlen.

Zweckmäßig ist es dabei, wenn ein über seine axiale Länge durch Längsnuten mit Rippen versehener Profilrohling, Profilstab oder Profilrohr mit einer Innenhöhlung versehen wird, wenn die Innenhöhlung über einen Teil der Erstreckungslänge des herzustellenden Klemmringes über den Nutengrund hinaus so erweitert wird, daß die Rippen in diesem Bereich zumindest über einen Teil ihrer Länge voneinander durch einen Zwischenraum getrennt sind, und wenn ein diesem Zwischenraum in axialer Richtung benachbarter Haltering, insbesondere mit einem kleineren Durchmesser, stehen gelassen und in dessen Bereich der Klemmring von dem Profilrohling, Profilstab oder -rohr abgetrennt wird.

Im einfachsten Fall ergeben sich somit Klemmringe, bei denen der Innendurchmesser eines innenliegenden Halteringes dem Nennmaß des größten zu erfassenden Rohres entsprechen kann, das heißt, die Klemmfinger werden beim Erfassen eines solchen Rohres zunächst um die Durchmesserdifferenz gegenüber dem Haltering nach innen verformt, bevor der eigentliche Klemmvorgang beginnt. Dies kann bei einer Weiterbildung dadurch vermieden werden, daß die voneinander getrennten Rippen oder Klemmfinger radial nach innen verformt und auf den Nenndurchmesser ausgedreht oder gefräst werden. Wenn danach dann das Abtrennen von dem Rohling oder Ausgangsprofil erfolgt, entsteht ein Klemmring, bei dem auch der Klemmbereich von vorne herein dem größten Nenndurchmesser eines zu erfassenden länglichen Körpers oder Rohres entspricht, so daß gleich die ersten Umdrehungen an dem Gewinde einer Überwurfmutter oder dergleichen dafür sorgen, daß die Druckfläche für die Klemmfinger eine radiale Klemmkraft erzeugt.

Eine abgewandelte Verfahrensweise kann darin bestehen, daß ein Profilrohling, Profilstab oder Profilrohr mit Außenrippen vorzugsweise um seine Längsachse drehangetrieben, sein Zentrum von der Stirnseite her ausgebohrt oder -gefräst und bereichsweise ausgedreht wird, bis zwischen den Rippen über einen Teil ihrer Länge sie voneinander trennende Zwischenräume frei werden, und der Innendurchmesser der Klemmfinger in ihrem vorderen Bereich dem Innendurchmesser des Halteringes etwa entspricht, daß dann der vordere Bereich zwischen den Rippen über eine axiale Länge, die geringer als die Breite des Klemmringes ist, geräumt und insbesondere an den in radialer Richtung innenliegenden Kanten der Finger gerundet wird und daß der Klemmring danach im hinteren Bereich des stehengebliebenen Halteringes abgestochen wird.

Auf diese Weise ergeben sich nicht nur im Bereich des Halteringes, sondern auch an dem entgegengesetzten Ende der Klemmfinger nach Innen vorstehende Bereiche, beispielsweise ein weiterer Haltering oder Haltekrallen, so daß nunmehr beim Verklemmen schon von der ersten Drehbewegung einer Überwurfmutter an eine Klemmkraft auf ein Rohr oder einen länglichen Körper größten Nenndurchmessers ausgeübt wird. Der einer Druckfläche nähere Bereich der Klemmfinger wird dabei durch den Räumvorgang vollständig getrennt, so daß Stege oder Krallen gebildet werden können, die an ihrer Innenseite dem Nenndurchmesser eines größten zu erfassenden Körpers oder Rohres entsprechen, so daß bei der Verklemmung wiederum keine Leer-Verformung erforderlich ist, bis die Klemmfinger die Außenseite eines solchen Rohres oder dergleichen erreichen.

Besonders zweckmäßig ist es zur Herstellung eines Klemmringes, bei welchem die Klemmfinger an ihrem dem Haltering abgewandten Klemmbereich nach innen vorstehende Klemmvorsprünge oder -krallen haben, wenn das Profil gebohrt und ein mittlerer Bereich der Klemmfinger anschließend ausgedreht und dabei an der Stirnseite befindliche Bereiche kleineren Durchmessers stehengelassen und hinterdreht werden - so daß sie anschließend die gewünschten Klemmvorsprünge bilden - und daß die hinterdrehten Ringbereiche mit kleinerem Innendurchmesser anschließend zwischen den Klemmfingern geräumt werden - damit in diesen Klemmbereichen die axial verlaufenden Schlitze auch in radialer Richtung den Klemmring vollständig durchsetzen.

Eine besonders zweckmäßige Ausgestaltung des Verfahrens zur Bildung von Klemmfingern, bei denen im Klemmbereich eine Rundung mit geringerem Krümmungsradius vorgesehen ist, als es dem Nennradius des Klemmringes entspricht, kann darin bestehen, daß der vorzugsweise rotierende Profilstab ausgedreht und die Rippen über einen Teil ihrer Länge voneinander getrennt, anschließend von ihrer Stirnseite her radial nach innen verformt und in verformter Position erneut, aber nun kleiner ausgedreht, danach aufgeweitet werden und daß dann der Klemmring im Bereich des stehengebliebenen Halteringes abgestochen wird. Dabei wäre auch denkbar, daß die letzte Trennung der einzelnen Klemmfinger in ihrem Klemmbereich dadurch geschieht, daß sie bei ihrer Verformung nach innen noch zusammenhängen und durch das Ausdrehen mit dem kleineren Innenradius endgültig getrennt werden. Durch diesen zusätzlichen Schritt einer Verformung der Klemmfinger noch in dem Stadium, bei welchem der Klemmring nicht abgestochen ist, also noch als Rohling mit dem Profilstab verbunden ist, wird nur ein geringfügiger Zwischenschritt in dem Gesamtverfahren benötigt, um die vorteilhafte Gestaltung der Rundung an der Innenseite der Klemmfinger zu erreichen.

Zwar könnte der rotierende Profilstab oder das rotierende Profilrohr jeweils nur über eine solche Länge insbesondere an seiner Innenseite bearbeitet werden, die der Breite eines herzustellenden Klemmringes entspricht. Für eine rationelle Serienfertigung ist es jedoch zweckmäßig, wenn der Profilstab über eine größere Länge ausgebohrt und ausgedreht wird, als ein Klemmring breit ist, und wenn mehrere Räum- und Abstechschritte wiederholt werden und danach der Profilstab weiter ausgebohrt wird.

Ein abgewandeltes Verfahren, bei welchem ein Klemmring entsteht, bei dem die einzelnen Klemmfinger durch einen außenseitig umlaufenden Haltering verbunden sind, kann darin bestehen, daß ein radial innenliegende, in axialer Richtung verlaufende Rippen aufweisendes Rohr vorzugsweise um seine Mittelachse gedreht und an der Außenseite soweit abgedreht wird, daß die innenliegenden Rippen über einen axialen Teilbereich voneinander getrennt werden und daß danach der in axialer Richtung von der vorderen Stirnseite abliegende Haltering abgestochen wird. Es entsteht auf diese Weise ein Klemmring, bei welchem die Klemmfinger auch im Bereich des Halteringes an ihrer dem zu haltenden Rohr zugewandten Seite durch die Schlitze voneinander getrennt sind, da der Haltering an der Außenseite umläuft.

Eine Ausgestaltung des Verfahrens kann noch vorsehen, daß die axial freiliegenden Enden der Rippen des Profilstabes zumindest vor dem Abstechen eines Klemmringes, insbesondere vor oder nach dem Ausdrehen und/oder vor oder nach dem Ausbohren abgeschrägt und/oder abgerundet werden.

Zur Herstellung eines Klemmringes mit einem breiten, axial und radial durchgehenden Axialschlitz kann ein Profilstab oder Profilrohr mit einer Axialnut von insbesondere mindestens 3 bis 4 mm Breite und einer mindestens bis auf den Innendurchmesser des herzustellenden Klemmringes reichenden Nuttiefe vorzugsweise in eine Drehbewegung versetzt und durch Bohren und/oder Drehen die Nut zu einem durchgehenden Klemmschlitz geöffnet und danach der Klemmring abgestochen werden.

Die vorbeschriebenen zerspanenden Verfahren sind dabei besonders günstig, wenn der Klemmring aus Metall bestehen soll. Sie erlauben jeweils die Herstellung der vorbeschriebenen Klemmringe in einer rationellen Weise, so daß eine Automatenfertigung in entsprechend hohen Stückzahlen auch auf Drehautomaten entsprechend preiswert erfolgen kann, da das bisherige sehr aufwendige Schlitzfräsen durch dieses Fertigungsverfahren vollständig entfällt.

Ein erfindungsgemäßer Klemmring, der mit Hilfe des vorbeschriebenen Verfahrens hergestellt ist, kann dadurch gekennzeichnet sein, daß er aus einem axiale Rippen aufweisenden Profilrohling oder von einem axiale Rippen aufweisenden Profilstab oder Profilrohr abgetrennt derart ausgehöhlt ist, daß die Rippen die durch Zwischenräume oder Schlitze getrennten Klemmfinger bilden. In günstiger Weise brauchen also die Klemmfinger nicht einzeln durch Fräsen oder dergleichen Spanabhebende Bearbeitung geformt zu werden, sondern die bei einem Rohling oder Profilstab oder Profilrohr von vornherein vorhandenen Rippen sind bereits die Klemmfinger und brauchen nur noch durch entsprechende Aushöhlung so weit voneinander getrennt zu werden, wie es für die Funktion als Klemmfinger erwünscht oder erforderlich ist.

Dabei können als Profilierung am Umfang des Klemmringes verteilt in axialer Richtung verlaufende, sich radial zur Ringmitte hin oder insbesondere sich an der Ringaußenseite öffnende Rinnen, Kerben, Nuten oder dergleichen vorgesehen sein.

Damit der Klemmring gut gehandhabt werden kann, ist es zweckmäßig, wenn die Schlitze in axialer Richtung durchgehend ausgebildet sind und einen Haltering die über seine gesamte axiale Breite verlaufenden Schlitze zumindest bereichsweise überbrückt. Durch den Haltering werden also die einzelnen Klemmfinger zusammengehalten, so daß der Klemmring eine gewisse Stabilität hat, die jedoch je nach Abmessung des Halteringes nur relativ klein zu sein braucht, um bei dem Einfügen dieses Klemmringes in eine Klemmverschraubung eine entsprechend gute Klemmwirkung durch Verformen dieses Klemmringes mit Hilfe einer Überwurfmutter oder dergleichen erzielen zu können. Der Haltering kann dabei schmaler als der Klemmring sein.

Der Schlitzgrund am Haltering kann dabei axial verlaufen und die dem Schlitz zugewandte Stirnseite des Halteringes kann im Querschnitt winklig dazu angeordnet sein. Eine solche winklige Form des Querschnittes des Halteringes läßt sich mit dem erfindungsgemäßen Verfahren gut herstellen und ergibt einen definierten Haltering, ohne daß der gesamte Klemmring durch spanende Bearbeitung hergestellt werden muß.

Der Haltering kann einen axial und auch radial durchgehenden Schlitz freilassen. Dies bedeutet, daß er nicht vollständig umlaufend geschlossen ist, so daß der Klemmring insgesamt noch etwas weicher und entsprechend leichter an ein Rohr oder dergleichen in einer Klemmverschraubung anpreßbar ist.

In der Mehrzahl der Fälle ist jedoch ein über den gesamten Umfang des Klemmringes umlaufender Haltering zweckmäßig. Dabei kann der die Schlitze überbrückende dünne Haltering leicht verformbar ausgebildet und einstückig mit dem von ihm zusammengehaltenen Klemmfingern verbunden sein, und dadurch können alle Klemmfinger des Klemmringes zusammenhängend verbunden sein. Ein solcher Klemmring kann innerhalb einer Klemmverschraubung über seinen gesamten Umfang gleichmäßig zusammengedrückt werden.

Je nach Ausgangsmaterial bei der Fertigung des Klemmringes kann der die am Umfang zwischen den einzelnen Axialschlitzen gebildeten Klemmfinger des Klemmringes zusammenhaltende Haltering an der Innenseite oder an der Außenseite des Klemmringes angeordnet sein. Er verläuft zum Beispiel an der Außenseite, wenn das Ausgangsmaterial ein Rohr mit innenliegenden Nuten ist. In der Regel werden jedoch die Nuten und die dazwischen befindlichen Rippen an der Außenseite eines Ausgangsprofiles verlaufen, so daß der Haltering zweckmäßigerweise an der Innenseite des Klemmringes angeordnet ist.

Weitere Ausgestaltungen des Klemmringes sind Gegenstand der Ansprüche 18 bis 36. Insbesondere ergeben sich dabei vorteilhafte Ausbildungen bezüglich Haltekrallen an den Klemmfingern, wodurch die Übertragung der Klemmkraft verbessert werden kann.

Insgesamt läßt sich mit Hilfe des Klemmringes bei Kombination einzelner oder mehrerer der in den Ansprüchen angegebenen Merkmale eine Klemmverschraubung bilden, die aus wenig Einzelteilen besteht und dennoch bei Verwendung gleicher Abmessungen dazu geeignet ist, längliche Körper, vor allem Rohre unterschiedlicher Außenabmessungen zu erfassen, weil die Klemmringe aufgrund ihrer Merkmale über einen relativ großen Durchmesserbereich zusammendrückbar sind. Somit können Herstellung und Lagerhaltung rationalisiert werden und auch die Montage bestimmter Klemmverbindungen dadurch vereinfacht werden, daß ein Monteur wesentlich weniger unterschiedliche Klemmverschraubungen und Klemmringe mit sich führen muß. Insbesondere läßt sich auch die Herstellung der Klemmringe selbst, obwohl sie aus Metall oder hartem Kunststoff bestehen, mit dem erfindungsgemäßen Verfahren automatisieren.

Nachstehend sind zweckmäßige und Vorteilhafte Ausführungsbeispiele von Klemmringen und damit hergestellten Klemmverschraubungen anhand der Zeichnung näher beschrieben.

Es zeigt in zum Teil schematisierter Darstellung:
- Fig. 1: eine zur Hälfte im Längsschnitt gehaltene Seitenansicht einer erfindungsgemäßen Klemmverschraubung in Gebrauchsstellung,
- Fig. 2: eine Seitenansicht eines teilweise im Querschnitt gehaltenen Klemmringes der Klemmverschraubung gemäß Fig. 1 und
- Fig. 3: eine Draufsicht des Klemmringes gemäß Fig. 2, der im Verlaufe seines Umfanges einen breiten, in axialer und radialer Richtung durchgehenden Schlitz und in den übrigen Umfangsbereichen Wandschwächungen hat,
- Fig. 4: eine der Fig. 1 entsprechende Darstellung einer abgewandelten Ausführungsform, bei welcher vor allem der Druckring zwischen Klemmring und Dichtung gegenüber Fig. 1 abgewandelt ist, aber auch der Klemmring eine andere Gestaltung hat,
- Fig. 5: eine der Fig. 2 entsprechende Darstellung des abgewandelten Klemmringes und
- Fig. 6: eine Draufsicht dieses Klemmringes gemäß Fig. 5, welcher einen breiten, in radialer und axialer Richtung durchgehenden Schlitz und an seiner runden Außenseite eine Vielzahl von seine Wandung schwächenden Aussparungen hat,
- Fig. 7: eine Draufsicht eines Klemmringes mit einem breiten Schlitz, der eine etwa sechskantförmige Außenkontur und eine kreisringförmige Innenkontur hat, wobei der Schlitz durch Entfernen einer Abflachung des Sechskantes gebildet ist und die Mittelbereiche der Abflachungen jeweils schwächer als die Kantenbereiche sind.
- Fig. 8: eine teilweise im Schnitt gehaltene Seitenansicht des Klemmringes gemäß Fig. 7,
- Fig. 9: eine Draufsicht eines gegenüber Fig. 7 dadurch abgewandelten Klemmringes, daß er eine etwa vierkantfömige Grundform hat, wobei in den Kantenbereichen außenseitige Abrundungen vorgesehen sind,
- Fig. 10: eine Draufsicht eines abgewandelten Klemmringes, der aus einem an der Außenseite profilierten Material gefertigt ist, wobei ein eine große Breite aufweisender durchgehender Schlitz und außerdem eine Vielzahl in axialer Richtung durchgängige Aussparungen vorgesehen sind.
- Fig. 11: eine gegenüber Fig. 10 abgewandelte Ausführungsform, bei welcher der in axialer und radialer Richtung durchgehender Schlitz eine geringere Breite als bei der Anordnung nach Fig. 10 hat und demgemäß mehr in axialer Richtung verlaufende Schlitze vorgesehen sind, die in radialer Richtung von einem Haltering zusammengehalten sind,
- Fig. 12: eine Draufsicht eines im Bereich eines innen umlaufenden Halteringes geschlossenen Klemmringes mit mehreren in axialer Richtung und nach außen offenen Schlitzen und dazwischen angeordneten Klemmfingern,
- Fig. 13: einen Axialschnitt durch den Klemmring gemäß Fig. 12, wobei an der Innenseite zwei die durch die axialen Schlitze getrennten Klemmfinger zusammenhaltende Halteringe vorgesehen sind,
- Fig. 14: eine Draufsicht und
- Fig. 15: eine im Schnitt gehaltene Seitenansicht eines Klemmringes, bei welchem ein die zwischen den axial offenen Schlitzen befindlichen Klemmfinger zusammenhaltender Haltering praktisch über die gesamte axiale Erstreckung des Klemmringes verläuft und in den Zwischenräumen zwischen den Klemmfingern vorgefaltet ist,
- Fig. 16: eine Draufsicht und
- Fig. 17: eine im Schnitt gehaltene Seitenansicht eines Klemmringes, der weniger Klemmfinger und Axialschlitze als der Klemmring gemäß Fig. 14 hat, wobei an der Innenseite ein dünner und verformbarer Haltering umläuft, dessen Breite in axialer Richtung nahezu der axialen Abmessung des Klemmringes entspricht,
- Fig. 18: eine Draufsicht und
- Fig. 19: eine teilweise im Schnitt gehaltene Ansicht eines abgewandelten Klemmringes, bei welchem die Axialschlitze über einen großen Teil ihrer Länge sowohl in radialer als auch in axialer Richtung offen sind und an einem Endbereich der die Klemmfinger zwischen den Schlitzen zusammenhaltende Haltering umläuft, wobei in Fig. 19 im Bereich des Halteringes in Ausgangsstellung eine ebene Anlagefläche vorgesehen ist, die zweckmäßigerweise mit einem sich trichterförmig zu seiner Innenseite verjüngenden Druckring kombinierbar ist,
- Fig. 20: einen Klemmring, der weniger Klemmfinger und Schlitze, aber Schlitze größerer Breite als der Klemmring gemäß Fig. 18 aufweist,
- Fig. 21: einen Schnitt durch den Ring gemäß Fig. 20, wobei der Haltering an einem Endbereich der Klemmfinger umlaufend ist und an dem entgegengesetzten Klemmbereich zwei benachbarte Haltevorsprünge vorgesehen sind und wobei die Anschlagseite des Klemmringes etwas eingesenkt ist und zum Zusammenwirken mit einem in Fig. 21 ebenfalls erkennbaren Druckring mit ebener Anschlagfläche vorgesehen ist,
- Fig. 22: eine schaubildliche Darstellung eines Klemmringes mit an einem Ende der Klemmfinger durch einen innenseitig umlaufenden Haltering zusammengehaltenen Klemmfingern, die an dem dem Haltering abgewandten Endbereich zwei unterschiedlich bemessene Haltekrallen oder - vorsprünge haben,
- Fig. 23: in stark schematisierter Darstellung das Zusammenwirken des Klemmringes gemäß Fig. 22 mit drei Rohren jeweils unterschiedlicher Außendurchmesser, wobei bei dem größten Rohr der der Stirnseite am weitesten abliegende Haltevorsprung, bei dem mittleren Rohr beide Haltevorsprünge und bei dem kleinsten Rohr der der Stirnseite des Klemmringes nächste Haltevorsprung an der Rohraußenseite wirksam werden,
- Fig. 24: eine Draufsicht eines Klemmringes, bei welchem die Klemmfinger in den Bereichen, in denen der Axialschlitz zwischen ihnen auch in radialer Richtung durchgehend ist, gebrochene und gerundete Kanten haben,
- Fig. 25: einen Schnitt durch den Ring gemäß Fig. 24, wobei an dem dem Haltering entgegengesetzten Ende der Klemmfinger ein einziger radial nach innen gerichteter Haltevorsprung an den einzelnen Klemmfingern vorgesehen ist, der gegenüber der Stirnseite einen größeren Abstand hat,
- Fig. 26: eine Draufsicht eines Klemmringes und
- Fig.27: einen Schnitt durch den Klemmring gemäß Fig. 26, bei welchem die an den Klemmfingern vorgesehenen Haltevorsprünge oder -krallen nahe der Stirnseite angeordnet sind,
- Fig.28: eine Draufsicht und
- Fig.29: einen Schnitt durch einen Klemmring, bei welchem parallel zu dem Haltering ein geschlossener, als Haltekralle oder -vorsprung wirkender Ring umläuft, der im Bereich der axial durchgehenden Schlitze beim Zusammenpressen der Klemmfinger verformbar oder faltbar ist,
- Fig.30: in auseinandergezogener oder Explosions-Darstellung eine teilweise im Schnitt gehaltene Halbverschraubung, bei welcher eine Überwurfmutter mit Steigungsänderung an der sich verjüngenden Druckfläche, ein Klemmring etwa gemäß Fig. 25, jedoch mit im Bereich des Halteringes ebener Anschlagfläche, ein eingesenkter Druckring und eine Dichtung vorgesehen sind,
- Fig.30a: dieselbe Kabelverschraubung, jedoch mit umgekehrtem Klemmring zeigt und in der Überwurfmutter die ringförmige Planfläche als Anlagefläche für den umgekehrten Klemmring angebracht ist.
- Fig.31: eine teilweise im Schnitt gehaltene Darstellung der Halbverschraubung gemäß Fig. 30 vor der Kupplung mit einem Gewindenippel oder dergleichen und vor einer Verklemmung,
- Fig.31a: eine Kabelverschraubung nach Figur 31, jedoch mit umgekehrt montiertem Klemmeinsatz zeigt
- Fig.32: eine teilweise im Schnitt gehaltene Klemmverschraubung in Gebrauchsstellung mit jeweils radial gekippten Klemmfingern und
- Fig.33: einen etwas abgewandelten Klemmring mit einem ebenfalls abgewandelten Druckring ohne die Überwurfmutter und unverformt, wobei der Klemmring an den stirnseitigen, von der Druckfläche beaufschlagten Enden der Klemmfinger Schrägflächen zur Angleichung an die Schrägfläche der Druckfläche hat,
- Fig.34: einen Längsschnitt durch eine Klemmverschraubung in Gebrauchsstellung, bei welcher das zu haltende Rohr und der Gewindestutzen oder -nippel, mit welchem das Rohr zu kuppeln ist, nicht fluchten und der Klemmring an beiden Stirnseiten abgerundet ist, wobei die dem Druckring zugewandte Seite des Klemmringes im Außendurchmesser kleiner gehalten ist, um eine Kippbewegung zwischen Klemmring und Druckring zu erleichtern.
- Fig.35: eine abgewandelte Ausführungsform des Klemmringes und insbesondere des mit diesem zusammenwirkenden Druckringes für eine Fluchtungsfehler aufnehmende Klemmverschraubung ähnlich der gemäß Fig. 34,
- Fig.36: eine Draufsicht eines Klemmringes, bei welchem die Klemmfinger an ihren Innenseiten mit einem kleineren Radius gekrümmt sind, als es dem Innen- oder Nennradius des Klemmringes entspricht,
- Fig. 37: einen Schnitt durch den Klemmring gemäß Fig. 36, wobei an einem dem umlaufenden dünnen Haltering entgegengesetzten Endbereich der Klemmfinger radial nach innen vorstehende Vorsprünge mit dem verkleinerten Krümmungsradius angeordnet sind,
- Fig.37a: zeigt im Detail verschieden gestaltete Haltekrallen
- Fig.38: eine Draufsicht eines Klemmringes und
- Fig.39: eine im Schnitt gehaltene Seitenansicht dieses Klemmringes mit einem Druckring, wobei der dünne Haltering an den Außenseiten der Klemmfinger umläuft und unmittelbar benachbart zu dem Haltering an der Außenseite der Klemmfinger einen ihre radiale Dicke schwächender Ansatz oder dergleichen Aussparung vorgesehen ist,
- Fig.39a: zeigt in einer Überwurfmutter eine Druckfläche, welche sich durch ihre Formgebung in mehreren Abschnitten insgesamt verjüngt,
- Fig 40 bis 42: in schematisierter Darstellung die einzelnen Verfahrensschritte, um von einem in Längsrichtung verlaufende Rippen aufweisenden Profil durch spanende Bearbeitung unterschiedliche Klemmringe herzustellen, wobei der jeweils erste, gegebenenfalls zweite und letzte Schritt übereinstimmen, aber unterschiedliche Zwischenschritte zur Bildung unterschiedlicher Klemmringe vorgesehen sind.

In der nachfolgenden Beschreibung unterschiedlicher Ausführungsbeispiele haben jeweils einander entsprechende Teile etwa gleicher Funktion auch dann übereinstimmende Bezugszahlen, wenn sie unterschiedlich gestaltet sind.

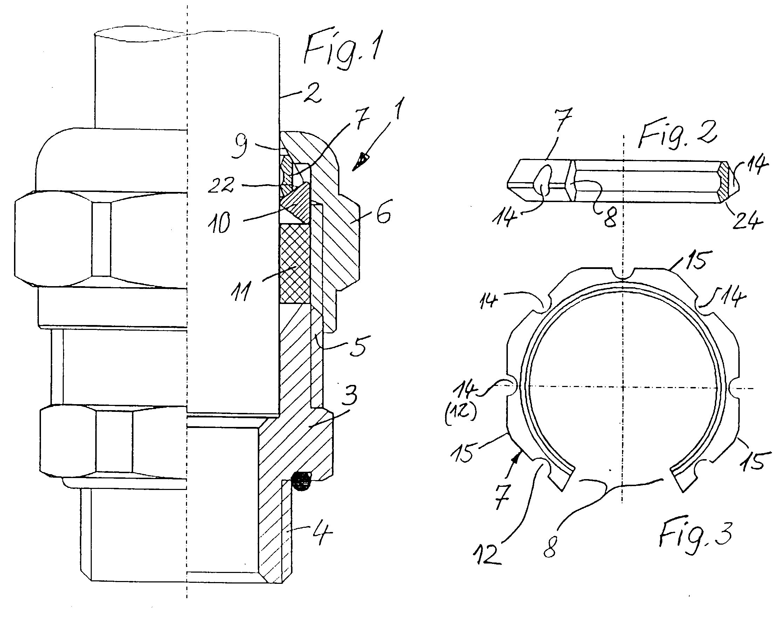

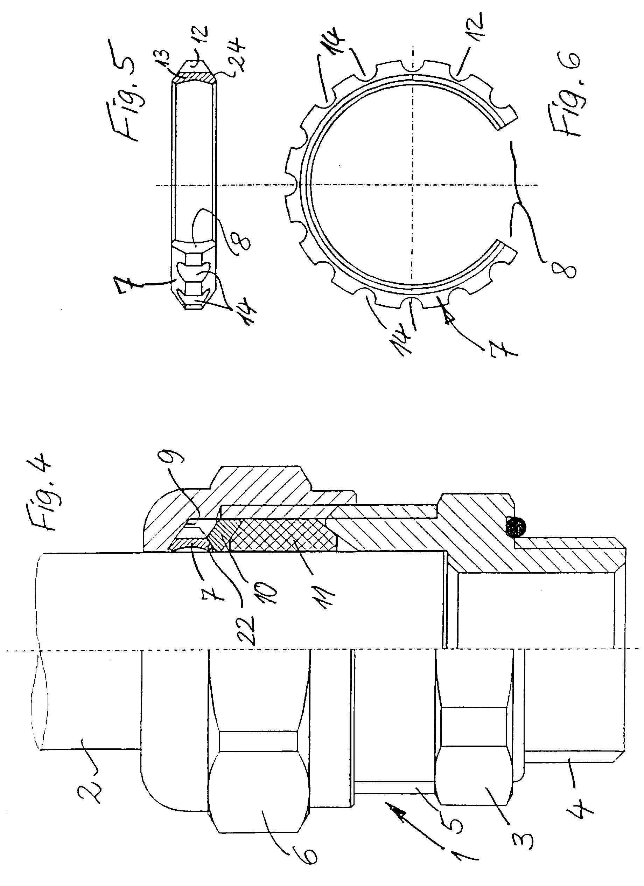

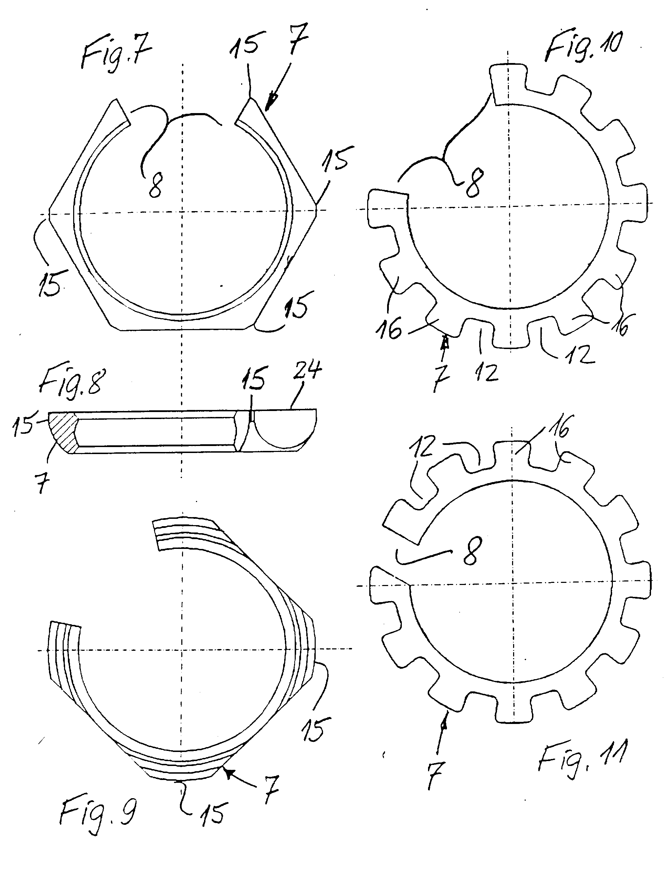

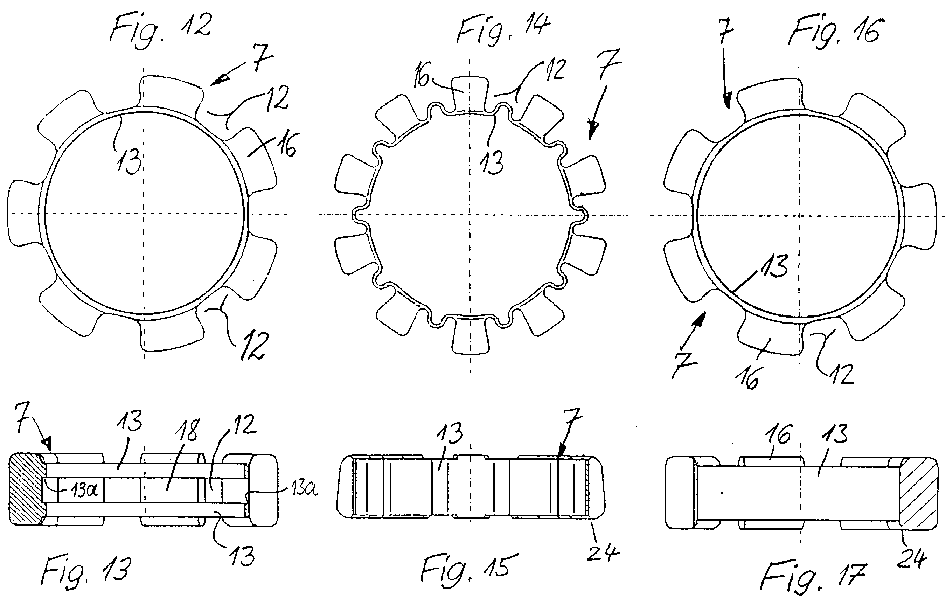

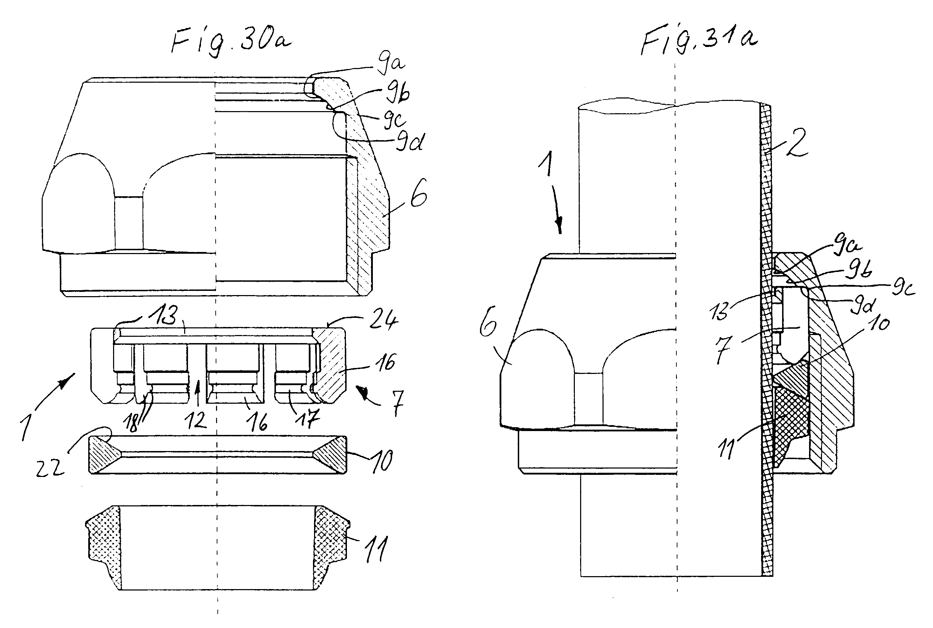

Eine im ganzen mit 1 bezeichnete Klemmverschraubung erkennt man in zusammengesetzter Form in den Figuren 1, 4, 32 und 34 sowie als sogenannte, noch zu erläuternde Halbverschraubung in Fig. 31 u. 31a beziehungsweise diese Halbverschraubung in auseinandergezogener Darstellung in Fig. 30 und 30a.

Mit dieser Klemmverschraubung 1 sollen längliche Körper, im Ausführungsbeispiel Rohre 2, gegebenenfalls aber auch Schläuche oder Kabel oder Kunststoffrohre erfaßt und mit einem Gegenstück 3 verbunden werden. Dieses Gegenstück ist in den Ausführungsbeispielen gemäß Fig. 1, 4, 32 und 34 ein Gewindestutzen, der seinerseits ein der eigentlichen Klemmverbindung abgewandtes Außengewinde 4 zum Verbinden mit einem weiteren Rohr oder dergleichen ein Innengewinde aufweisendes Teil hat. Bei der Halbverschraubung gemäß Fig. 30 u. 30a und 31 u. 31a ist ein solches Gegenstück 3 nicht dargestellt, weil es beispielsweise direkt als Gewindenippel an einem weiterführenden Leitungsteil, einem Heizkörper, Verteiler oder dergleichen Behältnis fest installiert sein könnte, so daß der Benutzer die als Halbverschraubung ausgebildete Klemmverschraubung 1 unmittelbar daran anbringen könnte.

Zu dieser Klemmverschraubung 1 gehört in jedem Falle eine auf ein Gegengewinde 5 des Gegenstückes 3 passende Schraubhülse oder Überwurfmutter 6 und vor allem ein durch die Verschraubung zwischen Überwurfmutter 6 und Gegengewinde 5 des Gegenstückes 3 an den länglichen Körper oder Rohr 2 anpressbarer Klemmring 7 aus einem harten Werkstoff, vor allem aus Metall. Auch ein härterer Kunststoff ist möglich.

Vor allem dieser Klemmring 7 kann gemäß den verschiedenen Ausführungsbeispielen unterschiedliche Gestaltungen haben. In einigen Fällen hat er jedoch wenigstens einen über seine gesamte axiale Breite oder Abmessung verlaufenden Schlitz 8. Der Klemmring 7 ist dabei mittels einer ringartigen Druckfläche 9, die sich in allen dargestellten Ausführungsbeispielen an der Innenseite der Überwurfmutter 6 befindet, stirnseitig beaufschlagt oder übergriffen, wie man es deutlich in Fig. 1, 4, 31, 32 und 34 erkennt. Beim Anziehen des Gewindes 5 wird somit der Klemmring 7 aufgrund einer sich verjüngenden Form der Druckfläche 9, zum Beispiel mittels eines Konus oder einer Rundung, unter Verkleinerung der Breite des Schlitzes 8 gegen das Rohr 2 hin verformt und daran angepreßt. Dies bewirkt die gewünschte Verklemmung, durch welche das Rohr 2 mit dem Gewindenippel oder -stutzen, also dem Gegenstück 3 gekuppelt wird.

Die sich verjüngende Form zum radialen Zusammenpressen des Klemmringes 7 aufgrund einer axialen Verstellbewegung beim Verschrauben könnte auch an dem Gegenstück beziehungsweise einem dem Klemmring 7 benachbarten Druckring 10 vorgesehen sein und Fig. 1 und 4 zeigen Beispiele, bei denen der Klemmring 7 an beiden Stirnflächen jeweils von einer sich verjüngenden Form übergriffen ist und radial verformt werden kann.

Dabei erkennt man in den Ausführungsbeispielen ferner, daß dem Klemmring 7 in axialer Richtung benachbart eine Dichtung 11 vorgesehen ist und zwar auf der dem Klemmring 7 abgewandten Seite des unmittelbar an dem Klemmring 7 anliegenden Druckringes 10. Diese Dichtung 11 wird durch die Verschraubung zwischen Überwurfmutter 6 und Gegenstück 3 ebenfalls axial verformt und gestaucht, so daß gleichzeitig mit der Verklemmung des Rohres 2 auch eine gute Abdichtung erfolgt.

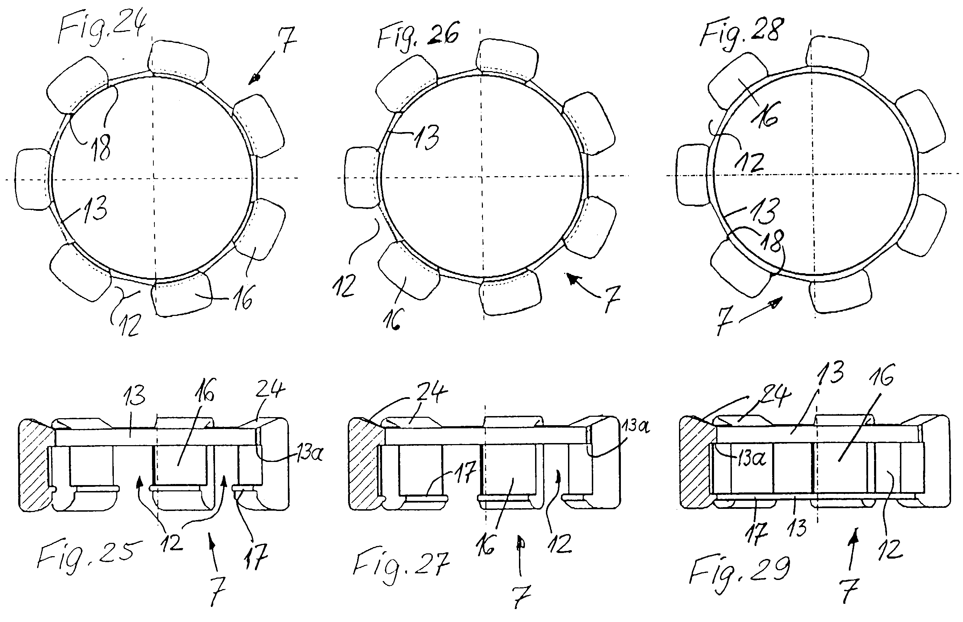

Damit mit der Klemmverschraubung 1 - in ihren unterschiedlichen Ausführungsbeispielen - Rohre 2 mit unterschiedlichen Außendurchmessern erfaßt werden können, wie es in Fig. 23 für eine besondere Ausführungsform des Klemmringes 7 schematisiert dargestellt ist, ist die Breite des Schlitzes 8 in Umfangsrichtung des Klemmringes 7 sehr groß bemessen, wie man es beispielsweise in Fig. 3, 6,7, 9 und 10 erkennt.

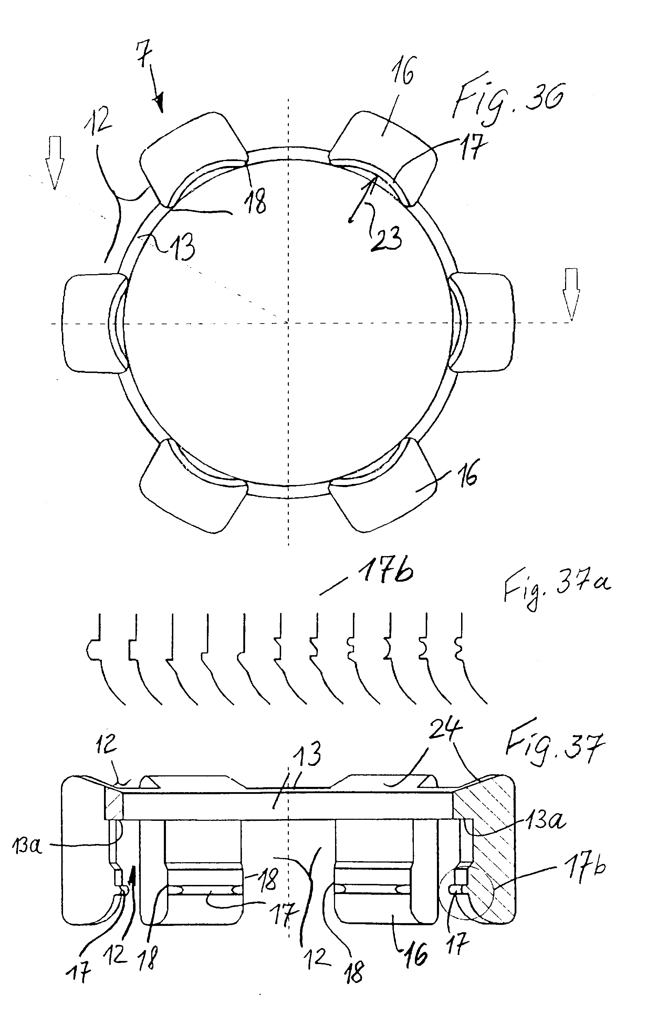

In anderen Ausführungsbeispielen ist nicht nur ein einziger, sowohl axial als auch radial durchgehender breiter Schlitz 8 vorgesehen, sondern es sind mehrere Schlitze 12 vorhanden, deren einander zugewandte Ränder jeweils durch einen gegenüber der radialen Dicke des Klemmringes 7 dünnen Haltering 13 verbunden sind. Beispiele dafür zeigen die Figuren 12 bis 29 und auch die in der Halbverschraubung gemäß Fig. 30/31a und 31/31a sowie den Ausführungsbeispielen gemäß Fig. 32 bis 35 gezeigten Klemmringe 7 sowie schließlich der Klemmring gemäß den Figuren 36 bis 39 ist in dieser Form gestaltet.

Fig. 10 und 11 zeigt, daß es aber auch möglich ist, einen axial und radial durchgehenden Schlitz 8 - gemäß Fig. 10 großer Breite, gemäß Fig. 11 geringerer Breite aber evtl. schräger Anordnung - vorzusehen und im übrigen an dem Klemmring 7 außerdem Schlitze 12 anzubringen, die in axialer Richtung durchgehend sind, deren Ränder aber zumindest über einen Teil der Breite des Klemmringes 7 durch einen - im Bereich des Schlitzes 8 unterbrochenen - Haltering 13 zu überbrücken.

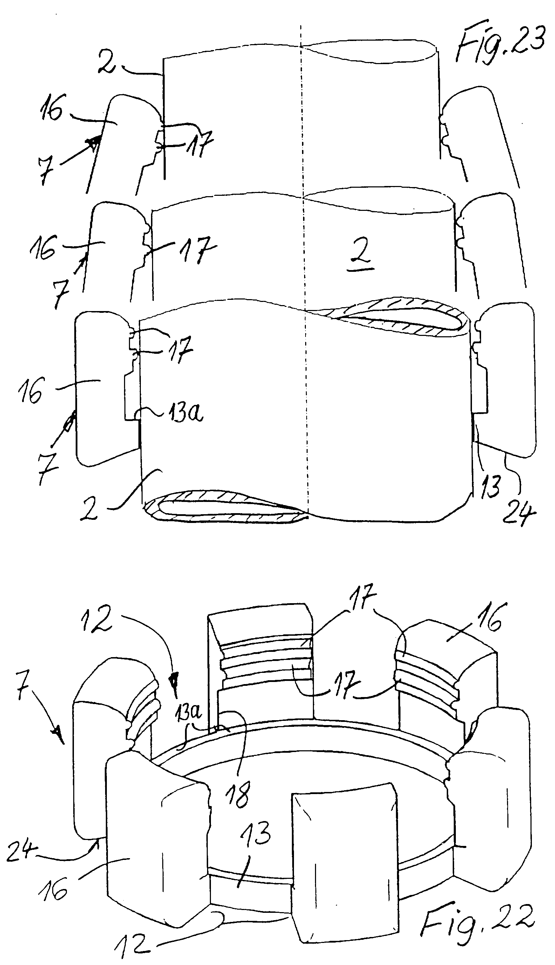

Die Breite des einzigen Schlitzes 8 oder die Summe der Breite mehrerer Schlitze 12, gegebenenfalls kombiniert noch mit einem Schlitz 8, ist in allen Ausführungsbeispielen so groß gewählt, daß sich der Durchmesser des Klemmringes 7 beim Zusammendrücken und Verkleinern des oder der Schlitze um wenigstens die Durchmesserdifferenz der zu erfassenden, unterschiedliche Außenabmessungen aufweisenden Rohre 2 oder sonstiger länglicher Körper oder um etwas mehr verringert. Betrachtet man Fig. 23, erkennt man, daß mit ein und demselben in Fig. 22 dargestellten Klemmring 7, der mehrere an seinem Umfang angeordnete Schlitze 12 hat, die in einem schmalen Bereich von dem Haltering 13 überbrückt werden, drei unterschiedlich dicke Rohre 2 oder sonstige stabförmige längliche Körper erfaßt und festgeklemmt werden können. Die durch die Überwurfmutter 6 beziehungsweise die Druckfläche 9 bewirkte Verformung kann nämlich entweder relativ gering oder aufgrund der Breite des oder der Schlitze auch relativ groß sein, so daß ein und dieselbe Klemmverschraubung 1 für unterschiedlich bemessene Rohre 2 benutzt werden kann.

Für Klemmringe 7 mit einem praktisch alleine die Breite für die starke Verformung aufweisenden Schlitz 8 gemäß Fig. 3, 6, 7 und 9 ist dabei außerdem vorgesehen, daß der Klemmring 7 an seinem Umfang derart profiliert ist, daß mit Abstand zueinander - am Umfang verteilt - seine Wandung in radialer Richtung geschwächt und in Umfangsrichtung daneben ungeschwächt oder verdickt ist. Wird ein Klemmring gemäß Fig. 3, 6, 7, 9 oder 10 verformt und soll dabei beispielsweise ein Rohr 2 mit kleinem Außendurchmesser erfaßt werden, sorgen die erwähnten Schwächungen der Ringwand dafür, daß der Ring über praktisch seinen gesamten Umfang jeweils abgebogen und an die Außenfläche des Rohres 2 angepreßt wird. Trotz des sehr breiten Schlitzes 8 ergibt sich somit eine gute Verteilung der Verklemmung über den Rohrumfang.

Der schon erwähnte Druckring 10 zwischen Klemmring 7 und Dichtung 11 verhindert dabei, daß der allmählich enger werdende oder sich schließende Schlitz 8 - bei Auführungsformen mit mehreren Schlitzen 12 auch diese - keine Dichtungsmasse des Dichtringes 11 erfassen und einklemmen und nicht durch solche eingeklemmte Dichtungsmasse an einer weiteren Verkleinerung verhindert werden. Somit hat der Druckring 10 eine Doppelfunktion, indem er ein gutes Widerlager für den Klemmring 7 bildet, die Axialkräfte auf die Dichtung 11 übertragen kann und diese gleichzeitig von dem oder den Schlitzen 8 und 12 des Klemmringes 7 fernhält. Bei stark konisch ausgebildeter Anlagefläche des Druckringes 10 gegenüber dem Klemmring 7 kann er zusätzlich noch an der radialen Zusammendrückung des Klemmringes 7 mitwirken.

Die in Umfangsrichtung orientierte Breite des Schlitzes 8 oder der Breite der Summe der am Umfang verteilten mehreren Schlitze 12 beträgt dabei jeweils mehr als das 3,14-fache der angestrebten Durchmesserdifferenz zum Beispiel 2 mm der unterschiedlichen zu erfassenden länglichen Körper oder Rohre 2. Dies bedeutet, daß die Breite des Schlitzes 8 oder die Summe der Breitenabmessungen der am Umfang verteilt angeordneten Schlitze 12 mehr als π x 2 mm, also etwa 6 mm oder auch mehr beträgt, wenn zum Beispiel drei verschieden dicke Rohre 2 erfaßt werden können sollen, deren Durchmesser um jeweils 1 mm differieren. So könnte beispielsweise das in Fig. 23 nicht maßstäblich dargestellte größte Rohr 2 einen Außendurchmesser von 17 mm, das nächstkleinere einen Außendurchmesser von 16 mm und das kleinste Rohr 2 einen Außendurchmesser von 15 mm haben und dennoch könnten alle drei Rohre mit ein und derselben Klemmverschraubung 1 erfaßt und mit der notwendigen Kraft verklemmt werden. Wird die Breite des oder der Schlitze mit π x 3 mm gewählt, können sogar Durchmesserunterschiede von etwa 10 mm mit ein und derselben Klemmverschraubung 1 erfaßt werden.

Ganz wesentlich für diese Möglichkeit mit ein und derselben Klemmverschraubung 1 gleicher Abmessung Rohre 2 unterschiedlicher Durchmesser erfassen zu können, ist der Klemmring 7 und seine spezielle, vorstehend schon kurz umrissene Formgebung und Schlitzung.

Wie schon erwähnt, sind in den Figuren 3 und 6 bis 9 Klemmringe 7 dargestellt, die einen einzigen, in Umfangsrichtung die gesamte beim Verklemmen auftretende Durchmesserverkleinerung aufnehmenden Schlitz 8 haben, wobei die übrigen Ringbereiche abwechselnd geschwächt und verdickt sind. Diese Schwächungen und Verdickungen können wiederum unterschiedlich gestaltet sein:

In den Ausführungsbeispielen gemäß Fig. 3 und 6 sind am Umfang des Klemmringes 7 verteilt in axialer Richtung verlaufende, sich radial an der Ringaußenseite öffnende Rinnen, Kerben 14, Nuten oder dergleichen Schwächungen als Schlitze 12 vorgesehen.

Fig. 7 und 9 zeigen Ausführungsbeispiele, bei denen der an seiner Innenseite kreisrunde Klemmring 7 an seiner Außenseite mehrkantförmig - gemäß Fig. 7 sechskantförmig, gemäß Fig. 9 vierkantförmig, jedoch sind auch andere Mehrkant-Ausführungen möglich - profiliert ist, so daß die mittleren Bereiche der jeweiligen Abflachungen dieser Mehrkantformen gegenüber den eigentlichen Kanten 15 an den Enden dieser Abflachungen die verminderte Wandstärke des Klemmringes bilden, wie man es ganz deutlich in Fig. 7 und 9 erkennt.

Fig. 3 ist dabei ein Beispiel für eine Kombination der vorerwähnten Möglichkeiten, Schwächungen im Verlaufe des Ringes vorzusehen, die die Verformung eines Klemmringes 7 unterstützen, der einen einzigen, breiten, axial und vorzugsweise auch radial offenen Schlitz 8 hat. Im Ausführungsbeispiel gemäß Fig. 3 ist vorgesehen, daß der äußere Umfang des Klemmringes 7 mehrkantförmig - in diesem Falle etwa achtkantförmig - ausgebildet ist und die einander in Umfangsrichtung benachbarten Abflachungen etwa in ihrer Mitte, also an der radial dünnsten Stelle zusätzliche Kerben 14, Rinnen, Nuten oder dergleichen Wandschwächungen haben, die sich dabei ebenfalls in radialer Richtung an der Ringaußenseite hin öffnen.

Diese Wandschwächungen haben im Zusammenwirken mit dem breiten Schlitz 8 die Wirkung dort, daß beim radialen Zusammendrücken des Klemmringes 7 und seines Schlitzes 8 nicht nur die dem Schlitz gegenüberliegende Stelle des Ringes gebogen wird, sondern sich die Verformung und Zusammenbiegung jeweils im Bereich der Wandschwächungen oder Kerben 14 gleichmäßig am Umfange des Ringes 7 verteilt. Entsprechend gleichmäßig legt sich der Klemmring 7 an der Außenseite eines Rohres 2 an, wenn sein breiter Schlitz 8 zusammengedrückt wird.

Fig. 10 und 11 zeigen Auführungsbeispiele, bei denen der Klemmeinsatz oder Klemmring 7 mehrere in axialer Richtung durchgehende Schlitze 12 hat, die durch einen Haltering 13 überbrückt sind, wobei jedoch außerdem ein axial und radial durchgehender Schlitz 8 vorgesehen ist, an welchem der Haltering 13 unterbrochen ist. In diesem Falle werden die zwischen den Schlitzen 12 durch diese ausgebildeten Klemmfinger 16 mit noch größerer Sicherheit radial an die Außenseite eines Rohres 2 angedrückt, wenn die konische Druckfläche 9 an der Stirnseite oder den Stirnseiten eine axiale Bewegung oder Relativbewegung durchführt.

Eine große Anzahl von Ausführungsbeispielen sieht vor, daß an dem Klemmring 7 einander jeweils benachbart axial durchgehende Schlitze 12 vorgesehen sind, die alle durch einen dünnen Haltering 13 überbrückt sind, der leicht verformbar ist und der dabei einstückig mit den von ihm zusammengehaltenen Klemmfingern 16 verbunden ist. Weiter unten wird beschrieben werden, wie vor allem zur Herstellung eines solchen Klemmringes 7 insbesondere aus Metall in zweckmäßiger und vorteilhafter Weise verfahren werden kann. Zunächst seien jedoch unterschiedliche Beispiele solcher Klemmringe 7 anhand der einzelnen Ausführungsbeispiele erläutert:

In den Ausführungsbeispielen gemäß Fig. 12 bis 37 ist der die am Umfang zwischen den einzelnen Axialschlitzen 12 gebildeten Klemmfinger 16 des Klemmringes 7 zusammenhaltende Haltering 13 an der Innenseite des Klemmringes 7 angeordnet und steht dabei sogar gegenüber der Innenseite der Klemmfinger 16 nach innen etwas vor.

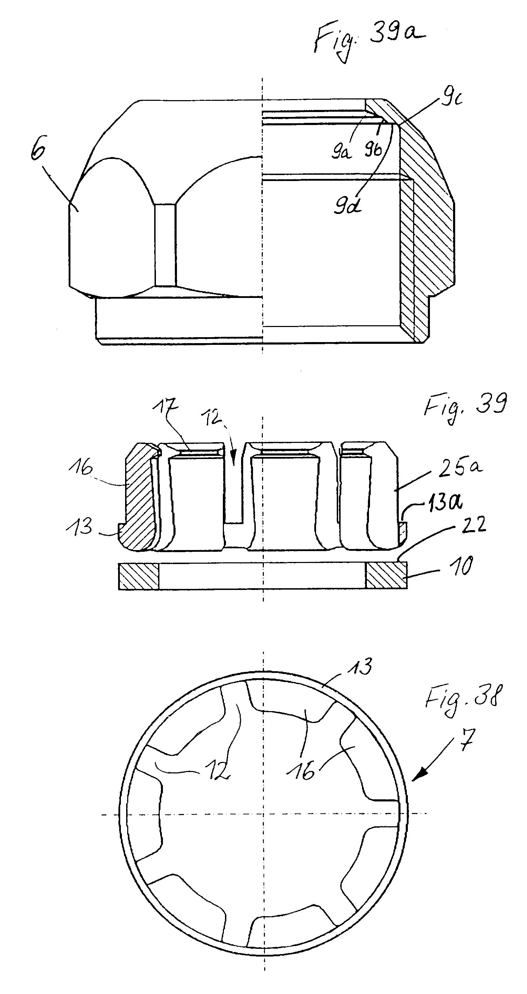

Der Klemmring gemäß Fig. 38 und 39 zeigt jedoch, daß der Haltering 13 auch an der Außenseite des Klemmringes 7 und dabei gegenüber der Außenseite der Klemmfinger 16 etwas vorstehend angeordnet sein kann. Ein innenliegender Haltering 13 ergibt jedoch beim ersten Aufstecken oder Durchstecken eines Rohres 2 eine günstigere Führung. Außerdem ist die Herstellung - was weiter unten näher erläutet wird - dadurch vereinfacht, daß von einem einfacheren Profil ausgegangen werden kann.

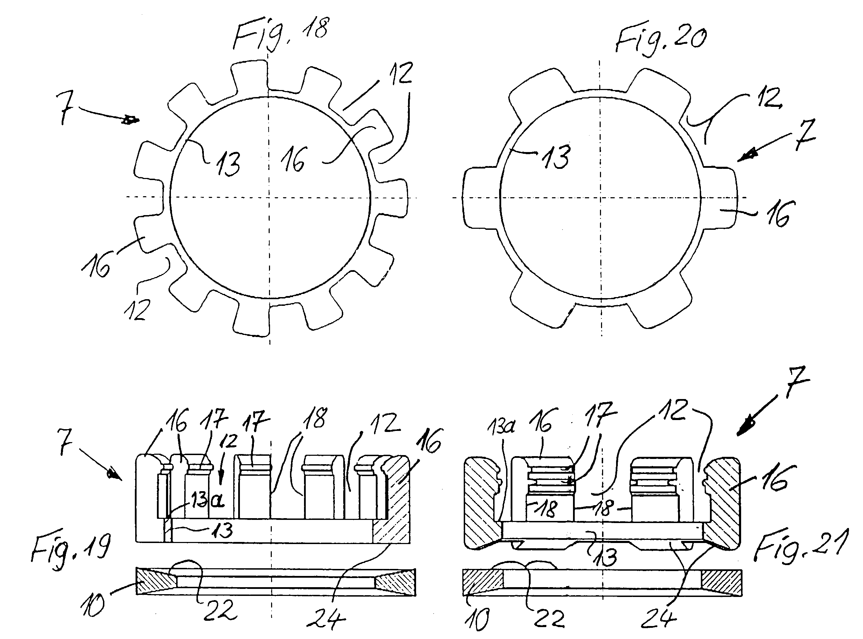

Da der Haltering 13, wie schon erwähnt, gegenüber der gesamten radialen Dicke des Klemmringes 7 sehr dünn ist, was man auch in den Figuren deutlich erkennt, kann er in dem Bereich zwischen dem Klemmfinger 16, also innerhalb der Schlitze 12 beim Zusammendrücken des Klemmringes 7 gut verformt und zwar vor allem gefaltet werden. Zur Erleichterung kann der Haltering 13 gemäß Fig. 14 sogar schon vorgefaltet sein, bevor der Klemmring 7 montiert wird. Durch eine solche Vorfaltung werden die erforderlichen Kräfte zum Zusammendrücken und Ver-formen dieses Halteringes 13 weiter vermindert und vor allem ergibt sich dadurch eine mit Sicherheit weitgehend gleichmäßige Verformung aller Abschnitte dieses Halteringes 13 in den einzelnen Klemmschlitzen 12. Fig. 14 und 15 sowie ferner auch Fig. 16 und 17 sind dabei gleichzeitig Beispiele dafür, daß der Haltering 13 sich etwa über den gesamten axialen Bereich des Klemmringes 7 erstrecken kann.

In den übrigen Ausführungsbeispielen erkennt man, daß die axiale Abmessung des oder der Halteringe 13 - in Fig. 13 sind zwei parallele Halteringe 13 vorgesehen - geringer als die des gesamten Klemmringes 7 und seiner Klemmfinger 16 sein kann. Je schmaler und dünner der Haltering 13 ist, umso leichter kann er verformt werden, umso geringer ist dann aber auch die Stabilität des Klemmringes 7, bevor er montiert wird, d.h. umso sorgfältiger muß dieser Klemmring 7 vor seiner Benutzung behandelt werden, um ungewollte Verformungen zu vermeiden.

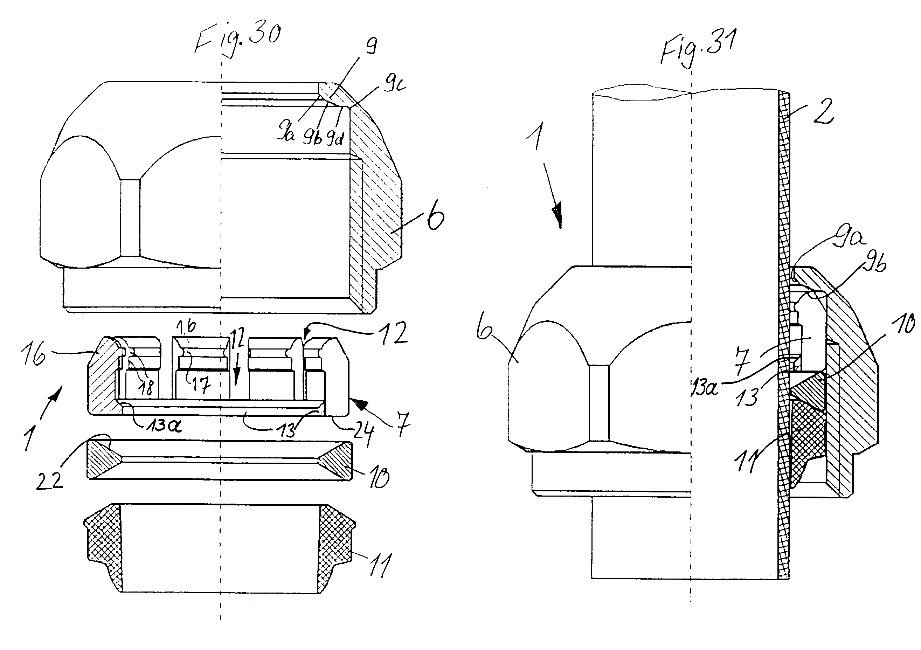

Die Ausführungsbeispiele gemäß Fig. 18 bis 37 sind Beispiele dafür, daß der Haltering 13 in zweckmäßiger Weise an einem Endbereich der Klemmfinger 16, insbesondere an dem der sich verjüngenden Druckfläche 9 der Überwurfmutter 6 in Gebrauchsstellung abgewandten Endbereich der Klemmfinger 16 angeorndet sein kann, so daß die von der Druckfläche 9 beaufschlagten Bereiche der Klemmfinger 16 umso leichter bei der axialen Beaufschlagung radial verformt werden können. Lediglich Fig. 29 zeigt ein weiteres Ausführungsbeispiel, bei welchem außerdem auch in dem anderen Endbereich der Klemmfinger 16 - etwa analog zu Fig. 13 - ein weiterer Haltering 13, in Fig. 29 aber als besondere Haltekralle, vorgesehen ist.

Es sind weitere Ausführungsbeispiele vorhanden, bei denen die Klemmfinger 16 an ihrem dem Haltering 13 entgegengesetzten Endbereich an ihrer Innenseite wenigstens einen radial nach innen gerichteten Vorsprung 17 als Haltekralle haben. Neben der schon erwähnten Ausführungsform gemäß Fig. 29, bei welcher sich diese Vorsprünge 17 in Umfangsrichtung zu einem Haltering ergänzen, erkennt man solche Anordnungen mit jeweils einem als Haltekralle dienenden Vorsprung 17 in Fig. 19, 25, 27, 30, 30a, 31, 31a, 32 bis 35 sowie 37. Dabei sind die radiale Erstreckung des Halteringes 13 und die der Haltekralle 17 gegenüber der Innenseite der Klemmfinger 16 etwa gleichgroß beziehungsweise hungsweise die Innenkonturen des Halteringes 13 und der Haltekrallen 17 können jeweils auf Kreisen gleichen Durchmessers liegen.

In Figur 37a ist im Detail dargestellt, daß die Haltekrallen 17 auch eine oder mehrere Schneidkanten 17b haben können, die scharfkantig, abgeflacht oder leicht gerundet sind.

Die Figuren 21 bis 23 sind Beispiele für Klemmringe 7, bei denen jeweils mehrere Haltevorsprünge 17 oder Haltekrallen in axialer Richtung nebeneinander an den Klemmfingern 16 angeordnet sind. Vor allem anhand der Figur 23 wird dabei ganz deutlich, daß die der Stirnseite der Klemmfinger 16 jeweils am nächsten liegende Haltekralle 17 eine radial kürzere Erstreckung als die weiter innenliegende Haltekralle 17 hat, also der Innendurchnesser, auf welchem die dem Rand des Klemmringes 7 nähere Haltekralle 17 endet, größer als der der Nachbarkralle 17 ist. Dies führt dazu, daß beim Klemmen eines Rohres 2 mit großem Außendurchmesser, bei welchem die Klemmfinger 16 nur wenig in radialer Richtung zu verformen sind, die größere und weiter innenliegende Haltekralle 17 zum Tragen kommt, während bei einem Rohr 2 mittleren Durchmessers die Klemmfinger soweit radial verformt und dabei gekippt sind, daß beide Haltekrallen 17 zur Anlage an der Rohraußenseite kommen. Wird ein noch kleineres Rohr eingeklemmt, wird dieses schließlich mit den in axialer Richtung dem Rand des Klemmringes 7 am nächsten liegenden Haltekralle 17 erfaßt. Somit unterstützt diese Maßnahme, Haltevorsprünge unterschiedlicher radialer Ausdehnung nebeneinander vorzusehen, die Möglichkeit, Rohre 2 unterschiedlicher Durchmesser sicher einklemmen zu können.

Beim Vergleich der Figuren 25 und 27 erkennt man noch, daß bei Verwendung jeweils nur eines Haltevorsprunges 17 als Haltekralle dessen Abstand zur Stirnseite des Klemmringes 7 ebenfalls variiert sein kann, wobei eine dem stirnseitigen Ende der Klemmfinger 16 näherliegende Haltekralle 17 zu einer früheren Berührung auch bei einem kleinen Rohrdurchmesser mit der Rohraußenseite führt, während ein axial weiter zurückversetzter Haltevorsprung 17 eine größere Zugentlastung bewirken kann.

Die verschiedenen vorbeschriebenen Klemmringe können aus Metall bestehen, wobei ihr Fertigungsverfahren weiter unten noch näher erläutert wird. Sie können aber auch aus einem harten Kunststoff bestehen. In all diesen Fällen ist wichtig, daß sich aufgrund des leicht verformbaren Halteringes 13, die Klemmfinger 16 beim Festklemmen des Rohres 2 oder dergleichen nicht oder kaum durchbiegen, sondern sich mehr oder weniger unverformt nach innen bewegen oder nach innen kippen und dabei den sie verbindenden Haltering 13 verformen, der dieser Verformung jedoch aufgrund seiner vorbeschriebenen geringen Abmessung wenig Widerstand entgegensetzt. Sowohl ein besonders günstiger Metall-Klemmring als auch ein solcher aus hartem Kunststoff kann in zweckmäßiger Weise innerhalb der Klemmverschraubung 1 dafür verwendet werden, mit ein und derselben Ausgangs-Abmessung Rohre 2 oder sonstige längliche Körper unterschiedlicher Außendurchmesser erfassen und festklemmen zu können.

Bei den Ausführungsbeispielen gemäß Fig. 10 und 11, gegebenenfalls auch dem gemäß Fig. 33, ist der die einzelnen zwischen den Axialschlitzen 12 stehenden Klemmfinger 16 zusammenhaltende Haltering 13 zumindest an seiner der Dichtung 11 zugewandten Seite mit einer derartigen radialen Erstreckung oder Dicke ausgeführt, daß er als einstückig mit dem Klemmring 7 verbundener Druckring 10 wirkt oder dient. Dies ist bei der Anordnung gemäß Fig. 11 oder 33 gut möglich, während bei einem Ring gemäß Fig. 10 zweckmäßigerweise zur Überbrückung des breiten Schlitzes 8 dennoch ein weiterer Druckring 10 oder eine Unterlagscheibe zwischen den Klemmring 7 und die Dichtung 11 einzulegen wäre.

Am Umfang des Klemmringes 7 verteilt können vorzugsweise drei bis zwölf Klemmfinger 16 und entsprechend viele Axialschlitze 12 angeordnet sein. Fig. 18 zeigt zum Beispiel eine Anordnung mit elf Klemmfingern 16 und elf Axalschlitzen 12.

Fig. 20 zeigt einen Klemmring 7 mit sechs Klemmfingern 16 und sechs Axialschlitzen 12.

Beispielsweise in den Figuren 24 und 26 aber auch in Fig. 13 und 17 sowie in weiteren Figuren ist angedeutet, daß die Kanten 18 an den Innenseiten der Klemmfinger 16 zweckmäßigerweise gebrochen oder gerundet sind, damit sie beim Einklemmen eines Rohres 2 dessen Außenseite nicht beschädigen. Besonders wichtig ist eine solche Abrundung der Kanten 18 bei dem noch gesondert zu erläuternden Ausführungsbeispiel gemäß Fig. 36, bei welchem vor allem bei Rohren 2 größeren Außendurchmessers vor allem diese gerundeten Kanten 18 an der Rohraußenseite zur Anlage kommen.

Es sei noch erwähnt, daß vorzugsweise bei einem Klemmring 7 aus Metall die am Umfang liegende Breite der Axialschlitze 12 und der Klemmfinger 16 in Ausgangslage vor der Verformung des Klemmringes 7 etwa gleichgroß sein können. Dies ergibt ein ausgewogenes Verhältnis zwischen der Summe der Breiten der Schlitze 12 und der in geklemmtem Zustand eine Flächenpressung oder Klemmkraft aufbringenden Klemmfinger 16.

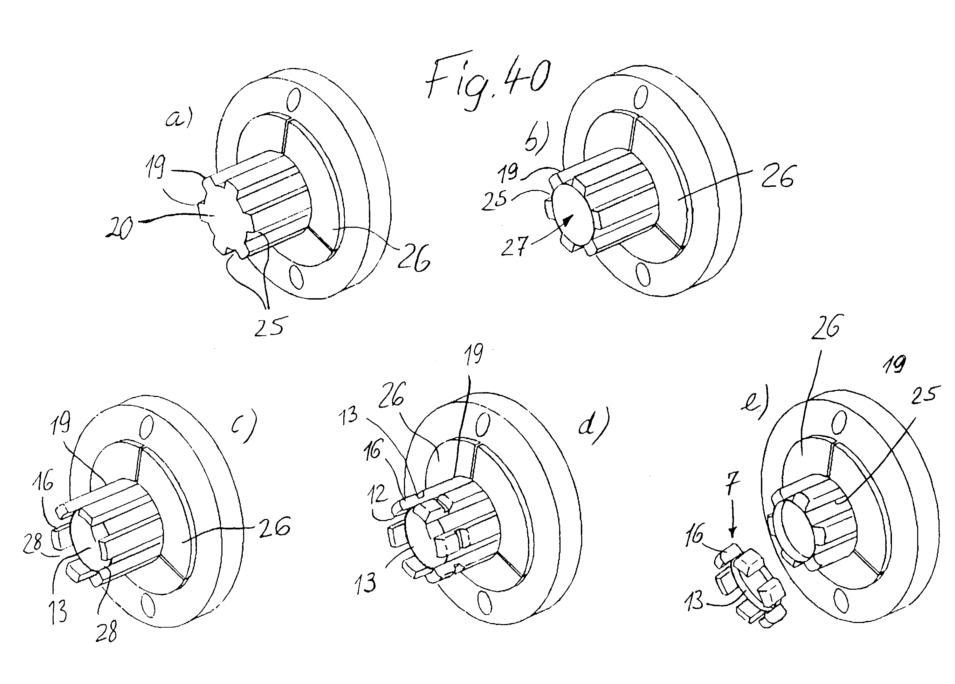

Vor allem bei einer Fertigung der Klemmringe 7 aus Metall kann der Klemmring 7 in anhand der Figuren 40 bis 42 noch näher zu beschreibender Weise von einem axiale Rippen 19 aufweisenden Profilstab 20 abgetrennt und derart ausgehöhlt sein, daß Rippen 19 die durch Zwischenräume oder Schlitze 12 getrennten Klemmfinger 16 bilden. Vor einer näheren Erläuterung eines entsprechenden Herstellungsverfahrens seien jedoch noch einige weitere Ausgestaltungsmöglichkeiten an unterschiedlichen Ausführungsbeispielen der Klemmringe 7 erläutert:
Bei dem Klemmring 7 gemäß Fig. 32 und dem Klemmring gemäß Fig. 33 sind die Klemmfinger 16 stirnseitig derart abgeschrägt und sich verjüngend ausgebildet, daß die axiale Erstreckung der Klemmfinger 16 am größeren Außendurchmesser geringer als an dem inneren Durchmesser der Verjüngung des Klemmringes 7 ist. Die der Stirnseite zugeneigte Schrägfläche der Klemmfinger 16 ist dabei unter einem Konuswinkel geneigt, der in Gebrauchsstellung, also nach der Verformung der Klemmfinger 16 gegen ein kleineres Rohr hin zu einer flächigen Anlage an der konischen Druckfläche 9 innerhalb der Überwurfmutter führt, wie man es in Fig. 32 deutlich erkennt. Diese Maßnahme unterstützt eine zentrische Fixierung des zu klemmenden länglichen Körpers 2.

Eine noch stärkere zentrische Fixierung des zu klemmenden länglichen Körpers 2, zum Beispiel eines Rohres wird erreicht, indem der Klemmring 7 in umgekehrter Lage, also mit dem Klemmfinger 16 an der Anlagefläche 22 des Druckringes 10 anstehend montiert wird, wie in Fig. 30a und 31a dargestellt. In diesem Fall ist es zweckmäßig, in der Überwurfmutter 6, den Übergang vom Kerndurchmesser des Innengewindes, in die konisch oder gerundet sich verjüngende Druckfläche 9 beziehungsweise 9a und 9b der Überwurfmutter 6 mit einer in eine ringförmige Planfläche 9d übergehenden Rundung oder schräger Fläche 9c zu versehen. Diese ringförmige Planfläche 9d dient dann als Anschlag für die Anschlagfläche 24 des Klemmringes 7 und hindert diesen Klemmring 7 beim Verschrauben der Klemmverschraubung, also beim eigentlichen Klemmvorgang, an einer nicht gewünschten Anpassung des Klemmringes 7 an ein nicht fluchtendes Rohr 2.

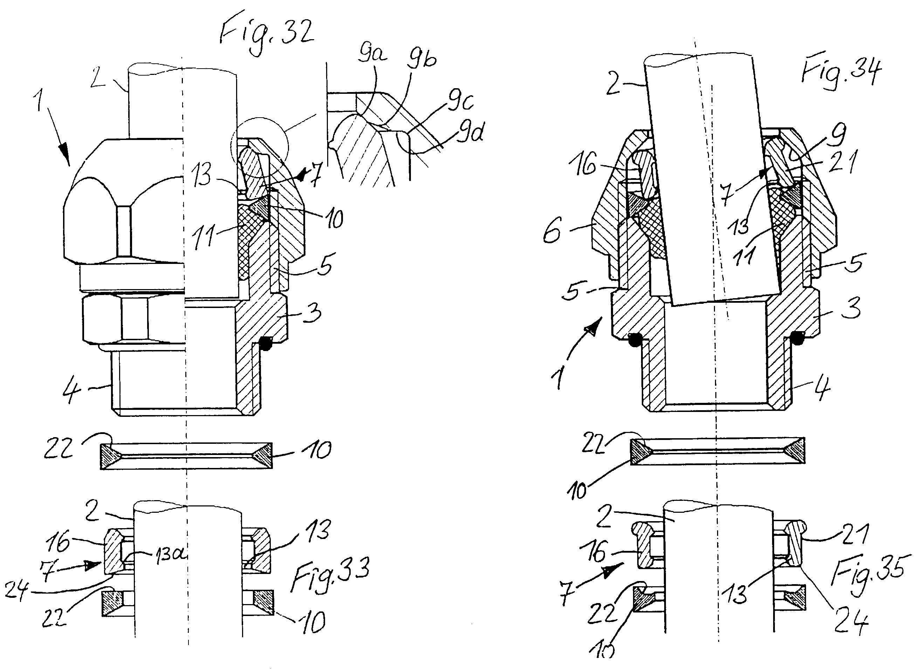

In Fig. 34 und 35 ist ein Klemmring 7 dargestellt, der an seinem der konischen Druckfläche 9 zugewandten Rand von seinem größeren Außendurchmesser zu seiner Stirnseite hin gerundet ist. Zusätzlich ist er auch an dem anderen stirnseitigen Übergang gerundet, d.h. der spezielle Klemmring gemäß Fig. 34 und der gemäß Fig. 35 ist an beiden stirnseitigen Übergängen zu den Stirnseiten seiner Klemmfinger 16 hin konvex gerundet. Die Rundungen sind sogar durch eine Hinterschneidung 21 an der Außenseite des Klemmringes 7 über den größten Außendurchmesser wieder auf einen kleineren Außendurchmesser fortgesetzt, welcher sich über den gesamten restlichen axialen Bereich erstrecken kann. so daß diese gerundeten Stirnseiten gelenkartig gegenüber den sie beaufschlagenden Flächen, also einerseits gegenüber der Druckfläche 9 in der Überwurfmutter 6 und zum anderen gegenüber der Anschlagfläche 22 des Druckringes 10 abgewälzt werden können. Dies schafft die in Fig. 34 deutlich dargestellte Möglichkeit, ein Rohr 2 mit einem Gegenstück 3 zu verbinden, obwohl die Mittelachsen des Rohres 2 und des Gegenstückes 3 nicht fluchten, sondern unter einem Winkel zueinander stehen. Dennoch wird das Rohr 2 von dem Klemmring 7 sicher erfaßt und festgeklemmt. Diese Anordnung eignet sich also besonders gut bei einer Montage mit Fluchtungsfehlern. Dazu trägt auch bei, daß die Dichtung 11 entsprechend nachgeben kann.

Es sei noch erwähnt, daß die schrägen Druckflächen 9, 9a, 9b und auch die Anlagefläche 22 an dem Druckring 10 gerundet sein können, wobei in Fig. 35 ein Druckring 10 dargestellt ist, dessen dem Klemmring 7 zugewandte Anlagefläche 22 konkav gerundet ist, um mit der konvexen Rundung der zugehörigen Stirnseite seite des Klemmringes 7 gut zusammenwirken zu können und eine entsprechende Verschwenkung leichtgängig zu ermöglichen.

Eine besondere Ausgestaltung des Klemmringes 7 ist in Fig. 36 und 37 dargestellt. In diesem Falle ist der Krümmungsradius 23 der in Umfangsrichtung an der Innenseite der einzelnen Klemmfinger 16 verlaufenden Rundung der Klemmfläche eines jeden Klemmfingers 16 kleiner als der Innenradius des Klemmringes 7 in seiner Ausgangsstellung vor dem Verklemmen. Wird ein solcher Klemmring 7 zur Befestigung eines Rohres mit einem relativ großen Außendurchmesser verwendet, liegen jeweils die beiden Kanten 18 an den Längsseiten der Klemmflächen der Klemmfinger 16 an der Rohraußenseite an. Erst bei einem kleinen Rohrdurchmesser, dessen Außenradius dem Krümmungsradius 23 entspricht, ergibt sich eine flächige Anlage und es kann also vermieden werden, daß jeder Klemmfinger nur mit einer inneren Linie an der Außenseite eines Rohres anliegt. Wird der Krümmungsradius 23 entsprechend dem Radius des kleinsten zu erfassenden Rohres 2 oder dergleichen Körpers gewählt, ergibt sich also für alle Anwendungsfälle jeweils eine bestmögliche Zugentlastung.

Dabei verdeutlicht Fig.37, daß auch die als Haltekralle dienenden Vorsprünge 17 eine entsprechende Rundung mit dem Krümmungsradius 23 haben können.

In mehreren Figuren erkennt man, daß die axial verlaufenden Schlitze 12 in Ausgangslage des Klemmringes eine sich von außen nach innen verjüngende Querschnittsform haben. Dies ist eine günstige Form für axiale Rippen 19 und die dazwischen befindlichen Nuten an einem Profilstab 20 bei dessen Herstellung. Gleichzeitig ergeben sich dadurch stabile Klemmfinger 16, deren Querschnitt über ihre Länge weitgehend gleichbleiben kann.

Der die Schlitze 12 oder auch den Schlitz 8 gegenüber der Dichtung 11 abschirmende Druckring 10 kann verschieden gestaltete Anlageflächen 22 haben. Die konkav gerundete Anschlagfläche 22 gemäß Fig. 35 wurde bereits erwähnt.

Der Druckring gemäß Fig. 1 und 4 sowie ferner die beispielhaft in Fig. 19, 30 und 31, 32 und 34 dargestellten Druckringe 10 haben eine zur Mitte axial eingesenkte, schräg zurückweichende Anschlagfläche 22, die mit in radialer Richtung ebenen Anschlagflächen 24 zusammenwirken sollen und können. Beim Verkippen der Klemmfinger 16 insbesondere zum Erfassen von Rohren 2 kleinerer Außenquerschnitte werden die der Druckfläche 9 abgewandten Stirnseiten der Klemmfinger 16 und somit die Anschlagfläche 24 des Klemmringes 7 ebenfalls verformt, was durch die erwähnte schräge Anschlagfläche 22 des Druckringes 10 unterstützt werden kann. Die erwähnte Kombination einer schräg nach innen zurückweichenden Anschlagfläche 22 am Druckring mit einer im wesentlichen in Ausgangsstellung ebenen Anschlagfläche 24 am Klemmring unterstützt also bei der Verschraubung und Verklemmung die erforderliche Verformung der Klemmfinger 16 und trägt in Gebrauchsstellung auch zur entsprechenden Übertragung der Halte- und Klemmkraft bei.

Dabei erkennt man in Fig. 1 und 4 sowie in Fig. 32 und 34, daß die der Anlagefläche 22 abgewandte Fläche des Druckringes 10 ebenfalls zur Mitte hin eingesenkt sein kann, um die dort anliegende Dichtung 11 etwas zu übergreifen und gut zu erfassen und zur Mitte gegen das Rohr 2 hin zu verformen und anzudrücken.

Im Ausführungsbeispiel nach Fig. 21, 22, 25 bis 29 ist die Anlagefläche 22 des Druckringes 10 für einen Klemmring 7 mit radial von außen nach innen etwas trichterförmig schräg verlaufender oder zurückweichender Anschlagfläche 24 eben ausgebildet. Dies wird auch in Fig. 33 gut erkennbar. Auch dadurch kann die Kippbewegung der Klemmfinger 16 bei ihrer radialen Verformung vor allem gegen ein Rohr 2 kleineren Durchmessers hin unterstützt werden. Dabei hat der an seiner Anlagefläche 22 ebene Druckring 10 gemäß Fig. 33 auf der gegenüberliegenden Seite wiederum eine schräg nach innen zurückweichende Anlagefläche für die Dichtung 11.

Vor allem eine sich relativ stark von außen nach innen trichterförmig verjüngende Anlagefläche 22 des Druckringes 10 kann auch zum radialen Verformen des Klemmringes 7 dienen, wenn er beispielsweise weitgehend symmetrisch gestaltete Klemmfinger und einen entsprechend symmetrisch umlaufenden Haltering 13 hat, wie man es in den Figuren 13 bis 17 erkennt.

Es wurde schon die konvexe Krümmung der Anschlagfläche 24 des Klemmringes 7 an ihrer dem Druckring 10 zugewandten Stirnseite gemäß Fig. 35 und die demgemäß konkave Rundung des Querschnittes der Anlagefläche 22 des Druckringes 10 erwähnt. Die gerundete Anschlagfläche 24 könnte sich aber auch auf einem im wesentlichen ebenen Druckring abwälzen und dies ist gemäß Fig. 34 sogar bei einer sich trichterförmig nach innen einsenkenden Anlagefläche 22 möglich.

Fig. 38 und 39 zeigen einen Klemmring 7, bei welchem der Haltering 13 an der Außenseite der Klemmfinger 16 umläuft, wobei diesem die Klemmfinger 16 verbindenden Haltering 13 in axialer Richtung an den Klemmfingern 16 eine Durchmesserverkleinerung 25a benachbart ist. Der zugehörige Druckring 10 ist dabei beidseits eben ausgebildet, könnte aber wiederum auch Rundungen, Einsenkungen oder dergleichen insbesondere auf seiner der Dichtung 11 zugewandten Seite haben.

Die geschilderte Klemmverschraubung 1 hat den vor allem in Fig.23 deutlich sichtbaren Vorteil, daß sie für jeweils mehrere Rohre unterschiedlicher Nenndurchmesser geeignet ist, also eine größere Serienfertigung und damit auch einen starken Rationalisierungseffekt bei der Fertigung und der Lagerhaltung erlaubt. Dennoch ist wichtig, daß der für diese Anpassbarkeit der Klemmverschraubung 1 an unterschiedliche Rohrdurchmesser besonders wichtige Klemmring 7 seinerseits möglichst preiswert und zweckmäßigerweise automatisch hergestellt werden kann, da das zeit- und kostenaufwendige Fräsen der einzelnen Schlitze entfällt.

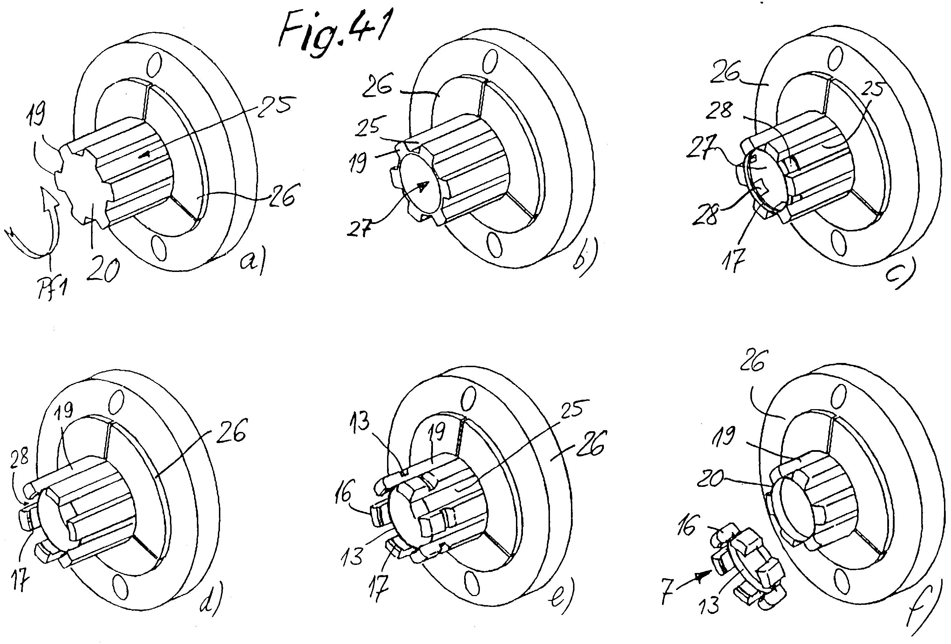

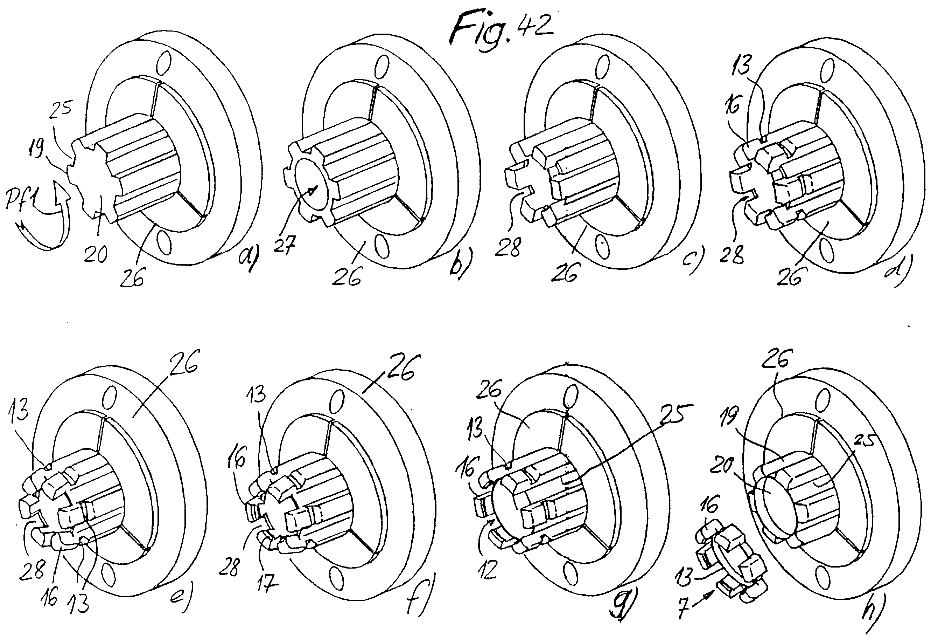

Anhand der Fig. 40a bis 40e, der Fig. 41a bis 41f und der Fig.42a bis 42h wird im folgenden die Verfahrensweise für eine automatisierte Herstellung eines Klemmringes 7 aus Metall näher beschrieben. Dabei erkennt man beim Vergleich dieser drei Figuren, daß Fig. 40a und 40b der Fig. 41a und 41b und auch der Fig. 42a und 42b praktisch identisch entspricht, weil die entsprechenden Verfahrensschritte bei den drei abgewandelten Verfahren übereinstimmen.

Auch der allerletzte Verfahrensschritt stimmt in allen drei Fällen überein. Im einzelnen wird folgendermaßen verfahren:

Der schon vorstehend kurz erwähnte Profilstab 20, der auch ein entsprechendes Profilrohr sein kann und der über seine axiale Länge durch Längsnuten 25 voneinander getrennte axiale Rippen 19 hat, wird in ein Klemmfutter 26 eingespannt, so daß ein Teil seiner Länge in der in Fig. 40a, 41a und 42a dargestellten Weise über dieses Futter 26 vorsteht. Durch einen Antrieb wird vorzugsweise das Futter 26 und damit der Profilstab 20 um seine Längsmittelachse in Richtung des in diesen Figuren angedeuteten Pfeiles Pf1 rotierend angetrieben.

Es kann aber auch der Profilstab oder bereits abgetrennte Profilrohlinge auf Rundtaktmaschinen oder sonstigen Fertigungsanlagen bearbeitet werden, wobei der Stab nicht in Rotation versetzt wird, um einen Klemmring 7 herzustellen.

In allen Fällen wird nunmehr dieser Profilstab 20 oder der Profilrohling mit einer Innenhöhlung 27 versehen, wie es in den Figuren 40b, 41b und 42b angedeutet ist. Diese Innenhöhlung 27 bildet bereits den wesentlichen Teil der Innenöffnung des späteren Klemmringes 7.

Diese Innenhöhlung 27 wird gemäß Fig. 40c oder 41c über einen Teil der Erstreckungslänge des herzustellenden Klemmringes 7 über den Nutengrund hinaus so erweitert, daß die Rippen 19 in diesem Bereich voneinander durch einen Zwischenraum 28 getrennt sind. Dieser Zwischenraum 28 entspricht dabei schon weitgehend den späteren Schlitzen 12 des Klemmringes 7.

Wird anstelle eines Vollmateriales ein Rohr mit axialen Rippen 19 gewählt, kann das Verfahren bei der Anordnung gemäß Fig. 40b, 41b und 42b beginnen.

Bei der erwähnten Erweiterung der Innenhöhlung wird ein den Zwischenräumen 28 in axialer Richtung benachbarter Haltering 13 mit einem kleineren Durchmesser stehengelassen, wie es in Fig. 40d und in den Figuren 41d und 41e erkennbar ist. Im Bereich dieses Halteringes 13 wird schließlich der fertige Klemmring 7 gemäß Fig. 40e, 41f und 42h abgestochen.

Der in Fig. 40d, 41e und 42d dargestellte Verfahrensschritt deutet das Ausformen der Kontur der Klemmfinger 16 durch ein äußeres Abdrehen an, denn gegenüber der vorhergehenden Verfahrensfigur erkennt man jeweils die an der Außenseite an den Klemmfingern 16 gebildete Rundung, die durch Abdrehen erzeugt werden kann. Es wäre aber auch möglich, dieses Abdrehen schon vorher, beispielsweise als zweiten oder auch als dritten Verfahrensschritt durchzuführen, d.h. die vorstehend erläuterten Verfahrensschritte können auch gegeneinander vertauscht werden.

Bei dem Verfahren gemäß Fig. 40 könnte noch ein weiterer Verfahrensschritt eingeschaltet werden, indem die gebildeten Klemmfinger 16 in einem Zwischenschritt radial etwas nach innen gebogen werden, so daß ihre freien Stirnseiten auf einem kleineren Kreis zu liegen kommen, als dies in Fig. 40c und 40d der Fall ist. Wenn nach einer solchen Verformung die Innenseiten ausgedreht werden, können sie genau das Nennmaß des größten zu erfassenden Rohres erhalten, während der gemäß der Verfahrensweise in Fig. 40 entstehende Klemmring an den freien Enden der Klemmfinger aufgrund des auf einem kleineren Durchmesser liegenden Halteringes in Ausgangsstellung einen kleinen Abstand gegenüber dem zu erfassenden größten Rohr 2 haben.

In Fig. 41 ist ein Verfahren dargestellt, bei welchem der Profilstab 20 oder ein Profilrohr mit Außenrippen 19 um seine Längsachse drehangetrieben, sein Zentrum von der Stirnseite her ausgebohrt oder ausgefräst und bereichsweise ausgedreht wird, bis zwischen den Rippen 19 über einen Teil ihrer Länge sie voneinander trennende Zwischenräume 28 freigedreht sind. Dabei wird gemäß Fig. 41c dafür gesorgt, daß der Innendurchmesser der Klemmfinger 16 im vorderen Bereich dem Innendurchmesser des Halteringes 13 im hinteren Bereich etwa entspricht und daß der oder die Klemmringe 7 wiederum gemäß Fig. 41f im Bereich des stehengebliebenen Halteringes 13 abgestochen werden. Würde dabei auf den nachstehend erläuterten Verfahrensschritt gemäß Fig. 41d verzichtet, entsteht ein Klemmring gemäß Fig. 13 oder vor allem gemäß Fig. 29. Der stehengebliebene im vorderen Bereich der Klemmfinger befindliche Ring hat dabei zwecckmäßigerweise die Form der schon beschriebenen Vorsprünge 17, die als Haltekralle dienen können.

In Fig. 41d ist als zusätzlicher Verfahrensschritt vorgesehen, daß der Profilstab 20 an seiner Innenhöhlung 27 über eine axiale Länge, die geringer als die Breite des entstehenden Klemmringes 7 ist, zwischen den Rippen 19 geräumt wird, wodurch im vorderen Bereich befindliche Ringabschnitte entfernt werden können, so daß dann die einzelnen Klemmfinger gemäß Fig. 41d bis 41f nur noch von dem Haltering 13 zusammengehalten werden. Bei diesem Räumvorgang können gleichzeitig an den in radialer Richtung innenliegenden Kanten 18 die gewünschten Abschrägungen oder Abrundungen vorgenommen werden, wenn das Räumwerkzeug die entsprechende Form hat.

Bei den vorbeschriebenen Verfahren kann noch ein Verfahrensschritt hinzugefügt werden, der darin besteht, daß an der Stirnseite der entstehenden Klemmfinger 16 befindliche Bereiche kleineren Durchmessers stehengelassen und hinterdreht werden und daß die hinterdrehten Ringbereiche mit kleinerem Innendurchmesser anschließend zwischen den Klemmfingern geräumt werden. Im wesentlichen entspricht dies wiederum auch der Darstellung gemäß Fig. 41c und 41d.

Fig. 42 zeigt einen Teil der vorbeschriebenen Verfahrensschritte in den Figuren 42a bis 42d. Demgemäß wird wiederum der rotierende Profilstab 20 aufgebohrt, ausgedreht und es werden die Rippen 19 über einen Teil ihrer Länge voneinander in einer der vorbeschriebenen Weisen getrennt. Gemäß Fig. 42e werden die Rippen 19 beziehungsweise die späteren Klemmfinger von ihrer Stirnseite her radial nach innen verformt, indem beispielsweise in dieser Richtung eine Glocke aufgeschoben wird, und gemäß Fig. 42f werden sie nun in dieser verformten Position erneut, aber mit einem kleineren Innendurchmesser ausgedreht.

Danach werden sie gemäß Fig. 42g wieder aufgeweitet, evtl. außen fertiggeformt und anschließend der Klemmring 7 gemäß Fig. 42h im Bereich des stehengebliebenen Halteringes 13 abgestochen. Diese zusätzlichen Schritte gemäß Fig. 42e bis 42g bewirken die Schaffung eines Klemmringes gemäß Fig. 36, wobei die zugehörige Fig. 37 zusätzlich die schon erwähnte Hinterdrehung zeigt. Da die Rippen 19 nach ihrer Verformung auf einem kleineren Durchmesser innen ausgedreht werden, haben sie nach dem Aufweiten gemäß Fig. 42g den angestrebten kleineren Krümmungsradius 23 gegenüber dem Innenradius des gesamten Klemmringes 7.

Nicht dargestellt ist ein Verfahren zur Herstellung eines Klemmringes gemäß den Figuren 38 und 39, welches jedoch ähnlich ablaufen kann. Dabei ist ein innenliegendes, in axialer Richtung verlaufende Rippen 19 aufweisendes Rohr um seine Mittelachse drehangetrieben und wird an der Außenseite soweit abgedreht, daß die innenliegenden Rippen 19 über einen axialen Teilbereich voneinander getrennt werden, während der außenliegende Haltering 13 stehenbleibt. Bei diesem Abddrehen der Außenseite zum Trennen der Rippen voneinander und zur gleichzeitigen Schaffung der zwischen ihnen verlaufenden Schlitze 12 kann auch der in Umfangsrichtung verlaufende Einstich 25a angebracht werden. Als letzter Verfahrensschritt wird wiederum der in axialer Richtung von der vorderen Stirnseite abliegende Haltering 13 abgestochen und damit ein Klemmring 7 von dem Profilrohr getrennt.

Es sei noch erwähnt, daß der Profilstab 20 über eine größere Länge ausgebohrt und ausgedreht werden kann, als ein Klemmring 7 breit ist, so daß mehrere Räum-, Ausdreh- und Abstechschritte wiederholt werden können, wonach der Profilstab dann wiederum weiter ausgebohrt werden kann.

Das schon erwähnte Abdrehen an der Außenseite an den axial freiliegenden Enden der Rippe 19 des Profilstabes 20 erfolgt auf jeden Fall vor dem Abstechen eines Klemmringes 7 und dient dazu, die schon vorstehend beschriebene Abschrägung oder Abrundung an einem Klemmring 7 zu erzeugen.

In der Zeichnung ebenfalls nicht dargestellt ist die Anbringung eines in radialer und axialer Richtung durchgehenden Schlitzes 8 an einem von einem Profilstab 20 gefertigten Klemmring 7. Dies kann dadurch erfolgen, daß ein Profilstab 20, Profilrohr oder Profilrohling mit einer Axialnut von insbesondere mindestens 3 bis 4 mm Breite und einer mindestens bis auf den Innendurchmesser des herzustellenden Klemmringes 7 reichenden Nuttiefe und durch Bohren und/oder Drehen die Nut zu einem durchgehenden Klemmschlitz geöffnet und danach bei einem Profilstab- oder Profilrohr der Klemmring 7 abgetrennt wird.

Die vorbeschriebenen Verfahrensschritte können dabei in beliebigen Fertigungsanlagen in vorteilhafter Weise , aber an Drehmaschinen besonders vorteilhaft an einem Drehautomaten ablaufen, was zu einer entsprechend preiswerten Fertigung führt. Obwohl also Klemmringe mit in axialer Richtung durchgehenden und auch weitgehend in radialer Richtung offenen Schlitzen 8 und 12 eine derart große Schlitzbreite oder eine derart große Anzahl solcher Schlitze aufweisen, daß Rohre unterschiedlicher Außenabmessungen mit ein und derselben Klemmverschraubung 1 erfaßt werden können, kann diese Klemmverschraubung preiswert hergestellt werden.

Mehrere Ausführungsbeispiele und Figuren zeigen, daß der Schlitzgrund, also der am weitesten innenliegende Bereich der Schlitze 12, am Haltering 13 axial verläuft, also keine in radialer Richtung orientierte Richtungsänderungen oder dergleichen aufweist, und daß die dem Schlitz 12 jeweils zugewandte Stirnseite 13a des Halteringes 13 im Querschnitt winklig zu diesem Schlitzgrund angeordnet ist. Man erkennt dies beispielsweise in Figur 13, 19, 21, 25, 27, 29 und weiteren Figuren, wo diese Stirnseite 13a des Halteringes 13 im Querschnitt rechtwinklig zum Schlitzgrund angeordnet ist.

Im Ausführungsbeispiel gemäß Figur 30 und weiteren Beispielen verläuft hingegen diese Stirnseite 13a im Querschnitt unter einem anderen, zum Beispiel spitzen Winkel, ist jedoch dabei im Querschnitt geradlinig ausgebildet.

Die Bezugszahl 13a ist dabei nicht bei allen Ausführungsbeispielen eingetragen, aber beispielsweise deutlich in Figur 37 zu erkennen.

Zusammenfassend ergibt sich:

Die Klemmverschraubung 1 für längliche Körper 2, insbesondere für Rohre, Kabel, Schläuche oder dergleichen, weist eine auf ein Gegengewinde 5 eines Gegenstückes 3, zum Beispiel eines Gewindenippels oder -stutzens passende Schraubhülse oder Überwurfmutter 6 und ferner einen durch die Verschraubung an dem Körper oder Rohr 2 anpressbaren Klemmring 7 aus Metall oder Kunststoff auf, wobei dieser Klemmring 7 zur Ermöglichung seiner Durchmesserverkleinerung während des Klemmvorganges in axialer Richtung geschlitzt und mittels einer ringartigen Druckfläche 9 stirnseitig beaufschlagt oder übergriffen ist, wobei beim Anziehen des Gewindes 5 aufgrund einer sich verjüngenden Form, zum Beispiel mittels eines Konus oder einer Rundung, die Breite des oder der Schlitze 8 verkleinert und dadurch zwischen den Schlitzen 8 liegende Klemmfinger 16 gegen das Rohr hin bewegt und verformt werden. Dem Klemmring 7 in axialer Richtung benachbart ist eine Dichtung 11 vorgesehen, die durch die Axialbewegung bei der Verschraubung ebenfalls axial belastet und dadurch gestaucht und angedrückt wird. Die Breite des Schlitzes 8 oder die Summe der Breite mehrerer Schlitze 12, deren Ränder jeweils durch einen gegenüber der Dicke des Klemmringes 7 dünnen verformbaren Haltering 13 verbunden sind, ist dabei in Umfangsrichtung so groß, daß sich der Durchmesser des Klemmringes 7 beim Zusammendrücken und Verkleinern um wenigstens die Durchmesserdifferenz von unterschiedliche Außenabmessungen abweisenden länglichen Körpern oder Rohren 2 oder etwas mehr verringert. Insbesondere bei einem Klemmring 7 mit nur einem in axialer und radialer Richtung durchgehenden Schlitz 8 ist dessen Wandung in radialer Richtung geschwächt und in Umfangsrichtung daneben wiederum ungeschwächt oder verdickt, so daß in allen Fällen eine weitgehend gleichmäßige Verformung des Klemmringes an seinem gesamten Umfang und somit eine gleichmäßige Verklemmung gegenüber einem zu erfassenden Körper oder Rohr 2 erfolgt. Ein solcher Klemmring 7 kann in zweckmäßiger Weise auf einem Automaten gefertigt werden, wobei als Ausgangsmaterial ein Längsrippen 19 aufweisendes Profil 20 dienen kann, bei welchem durch entsprechende spanende Verformung die Längsrippen so voneinander getrennt werden, daß sie anschließend die Klemmfinger bilden, daß aber ein Ringbereich als verformbarer Haltering 13 erhalten bleibt.

Ein Klemmring 7 kann dadurch rationell und einfach und in großen Stückzahlen insbesondere weitgehend automatisiert gefertigt werden, daß an einem Profilstab, Pofilrohr oder Profilrohling mit axial verlaufenden Nuten im Bereich der jeweiligen Stirnseite durch Aufbohren, Auffräsen oder Ausdrehen über wenigstens einen Teil der axialen Erstreckung des Klemmringes 7 und in radialer Richtung über den Nutengrund des Rohlings oder Ausgangsmateriales hinaus die durch die Längsnuten gebildeten, axial verlaufenden Rippen zu von einander getrennten Klemmfingern 16 gemacht werden. Diese können dann in üblicher Weise innerhalb einer Klemmverschraubung durch eine Schraubhülse oder Überwurfmutter und einen konischen Bereich an einen länglichen Körper, insbesondere ein Rohr, Kabel, Schlauch oder dergleichen angepreßt werden, um einen solchen länglichen Körper in einer derartigen Klemmverschraubung festzulegen.

## Patentansprüche

1. Verfahren zur Herstellung eines mehrere am Umfang verteilt angeordnete Axialschlitze aufweisenden Klemmringes für Klemmverschraubung für längliche Körper, insbesondere für Rohre, Kabel, Schläuche oder dergleichen, welche Klemmverschraubung eine auf ein Gegengewinde eines Gegenstückes, z.B. eines Gewindenippels oder -stutzens passende Schraubhülse oder Überwurfmutter und den durch die Verschraubung an den länglichen Körper anspressbaren Klemmring aus Metall oder aus hartem Kunststoff aufweist, dadurch gekennzeichnet, daß an einem Profilstab, Profilrohr oder Profilrohling mit axial verlaufenden Nuten im Bereich der Stirnseite durch Aufbohren, Auffräsen oder Ausdrehen über einen Teil der axialen Erstreckung des Klemmringes und in radialer Richtung über den Nutengrund hinaus die durch die Längsnuten gebildeten, axial verlaufenden Rippen zu voneinander getrennten Klemmfingern gemacht werden.

2. Verfahren nach Anspruch 1, dadurch gekennzeichnet, daß ein über seine axiale Länge durch Längsnuten mit Rippen versehener Profilrohling, Profilstab oder Profilrohr mit einer Innenhöhlung versehen wird, daß die Innenhöhlung über einen Teil der Erstreckungslänge des herzustellenden Klemmringes über den Nutengrund hinaus so erweitert wird, daß die Rippen in diesem Bereich zumindest über einen Teil ihrer Länge voneinander durch einen Zwischenraum getrennt sind, und daß ein diesen Zwischenräumen in axialer Richtung benachbarter Haltering, insbesondere mit einem kleineren Durchmesser, stehengelassen und in dessen Bereich der Klemmring von dem Profilrohling, Profilstab oder -rohr abgetrennt wird.

3. Verfahren nach Anspruch 1 oder 2, dadurch gekennzeichnet, daß die voneinander getrennten Rippen oder Klemmfinger radial nach innen verformt und auf den Nenndurchmesser ausgedreht oder gefräst werden.

4. Verfahren nach einem der Ansprüche 1 bis 3, dadurch gekennzeichnet, daß ein Profilrohling, Profilstab oder Profilrohr mit Außenrippen vorzugsweise um seine Längsachse drehangetrieben, sein Zentrum von der Stirnseite her ausgebohrt oder -gefräst und bereichsweise ausgedreht wird, bis zwischen den Rippen über einen Teil ihrer Länge sie voneinander trennende Zwischenräume freiwerden, und der Innendurchmesser der Klemmfinger in ihrem vorderen Bereich dem Innendurchmesser des Halteringes etwa entspricht, daß dann der vordere Bereich zwischen den Rippen über eine axiale Länge, die geringer als die Breite des Klemmringes ist, geräumt und insbesondere an den in radialer Richtung innenliegenden Kanten der Finger gerundet wird und daß der Klemmring danach im hinteren Bereich des stehengebliebenen Halteringes abgestochen wird.

5. Verfahren nach einem der Ansprüche 1 bis 4, dadurch gekennzeichnet, daß das Profil (20) gebohrt und ein mittlerer Bereich der Klemmfinger (16) anschließend ausgedreht und dabei an der Stirnseite befindliche Bereiche kleineren Durchmessers stehengelassen und hinterdreht werden und daß die hinterdrehten Ringbereiche mit kleinerem Innendurchmesser anschließend zwischen den Klemmfingern (16) geräumt werden.

6. Verfahren nach einem der Ansprüche 1 bis 5, dadurch gekennzeichnet, daß der vorzugsweise rotierende Profilstab (20) ausgedreht und die Rippen (19) über einen Teil ihrer Länge insbesondere voneinander getrennt, anschließend von ihrer Stirnseite her radial nach innen verformt und in verformter Position erneut, aber nun kleiner ausgedreht, danach aufgeweitet werden und daß dann der Klemmring (7) im Bereich des stehengebliebenen Halteringes (13) abgestochen wird.

7. Verfahren nach einem der Ansprüche 1 bis 6, dadurch gekennzeichnet, daß der Profilstab (20) über eine größere Länge ausgebohrt und ausgedreht wird, als ein Klemmring (7) breit ist, und daß mehrere Räum- und Abstechschritte wiederholt werden und danach der Profilstab (20) weiter ausgebohrt wird.

8. Verfahren zur Herstellung eines mehrere am Umfang verteilt angeordnete Axialschlitze aufweisenden Klemmringes für eine Klemmverschraubung nach einem der Ansprüche 1 bis 7, dadurch gekennzeichnet, daß ein in axialer Richtung verlaufende, radial innenliegende Rippen aufweisendes Rohr um seine Mittelachse gedreht und an der Außenseite soweit abgedreht wird, daß die innenliegenden Rippen über einen axialen Teilbereich voneinander getrennt werden und daß danach der in axialer Richtung von der vorderen Stirnseite abliegende Haltering abgestochen wird.

9. Verfahren nach einem der Ansprüche 1 bis 8, dadurch gekennzeichnet, daß die axial freiliegenden Enden der Rippen (19) des Profilstabes (20) zumindest vor dem Abstechen eines Klemmringes (7), insbesondere vor oder nach dem Ausdrehen und/oder vor oder nach dem Ausbohren abgeschrägt und/oder abgerundet werden.

10. Verfahren zur Herstellung eines Klemmringes mit einem in axialer und radialer Richtung durchgehenden Axialschlitz nach einem der Ansprüche 1 bis 9, dadurch gekennzeichnet, daß ein Profilrohling, Profilstab (20) oder Profilrohr mit einer Axialnut von insbesondere mindestens 3 bis 4 mm Breite und einer mindestens bis auf den Innendurchmesser des herzustellenden Klemmringes (7) reichenden Nuttiefe vorzugsweise in eine Drehbewegung versetzt und durch Bohren und/oder Drehen und/oder Fräsen die Nut zu einem durchgehenden Klemmschlitz (8) geöffnet und danach der Klemmring (7) von einem Profilstab (20) oder Profilrohr abgestochen wird.

11. Klemmring, hergestellt nach dem Verfahren gemäß einem der Ansprüche 1 bis 10, dadurch gekennzeichnet, daß er aus einem axiale Rippen aufweisenden Profilrohling oder von einem axiale Rippen aufweisenden Profilstab (20) oder Profilrohr abgetrennt derart ausgehöhlt ist, daß die Rippen (19) die durch Zwischenräume oder Schlitze getrennten Klemmfinger (16) bilden.

12. Klemmring nach Anspruch 11, dadurch gekennzeichnet, daß als Profilierung am Umfang des Klemmringes verteilt in axialer Richtung verlaufende, sich radial zur Ringmitte hin oder insbesondere sich an der Ringaußenseite öffnende Rinnen, Kerben, Nuten oder dergleichen vorgesehen sind.

13. Klemmring nach Anspruch 11 oder 12, dadurch gekennzeichnet, daß die Schlitze (12) in axialer Richtung durchgehend ausgebildet sind und ein Haltering (13) die über seine gesamte axiale Breite verlaufenden Schlitze zumindest bereichsweise überbrückt.

14. Klemmring nach einem der Ansprüche 11 bis 13, dadurch gekennzeichnet, daß der Schlitzgrund am Haltering (13) axial verläuft und daß die dem Schlitz (12) zugewandte Stirnseite (13a) des Halteringes (13) im Querschnitt winklig dazu angeordnet ist.

15. Klemmring nach einem der Ansprüche 11 bis 14, dadurch gekennzeichnet, daß der Haltering (13) einen axial und auch radial durchgehenden Schlitz (8) frei läßt.

16. Klemmring nach einem der Ansprüche 11 bis 15, dadurch gekennzeichnet, daß der die Schlitze überbrückende dünne Haltering (13) leicht verformbar ausgebildet und einstückig mit den von ihm zusammengehaltenen Klemmfingern (16) verbunden ist und dadurch alle Klemmfinger (16) des Klemmringes (7) zusammenhängend verbunden sind.

17. Klemmring nach einem der Ansprüche 11 bis 16, dadurch gekennzeichnet, daß der die am Umfang zwischen den einzelnen Axialschlitzen (12) gebildeten Klemmfinger (16) des Klemmringes (7) zusammenhaltende Haltering (13) an der Innenseite oder an der Außenseite des Klemmringes (7) angeordnet ist.

18. Klemmring nach einem der Ansprüche 11 bis 17, dadurch gekennzeichnet, daß der Haltering (13) in dem Bereich zwischen den Klemmfingern (16), also innerhalb der Schlitze (12), faltbar, insbesondere vorgefaltet, ist und sich gegebenenfalls über den gesamten axialen Bereich des Klemmringes (7) erstreckt.

19. Klemmring nach einem der Ansprüche 1 bis 18, dadurch gekennzeichnet, daß die axiale Abmessung des/der Halteringe (13) geringer als die des gesamten Klemmringes (7) und seiner Klemmfinger (16) ist.

20. Klemmring nach einem der Ansprüche 1 bis 19, dadurch gekennzeichnet, daß der Haltering (13) gegenüber der Innenseite oder gegebenenfalls gegenüber der Außenseite der Klemmfinger überstehend umläuft.

21. Klemmring nach einem der Ansprüche 1 bis 20, dadurch gekennzeichnet, daß der Haltering (13) an einem Endbereich der Klemmfinger (16), insbesondere dem der sich verjüngenden Druckfläche (9) in Gebrauchsstellung abgewandten Endbereich der Klemmfinger (16) angeordnet ist.

22. Klemmring nach einem der Ansprüche 1 bis 21, dadurch gekennzeichnet, daß die Klemmfinger (16) an ihrem dem Haltering (13) entgegengesetzten Endbereich an ihrer Innenseite wenigstens einen radial nach innen gerichteten eckigen oder gerundeten Vorsprung als Haltekralle (17) haben.

23. Klemmring nach einem der Ansprüche 1 bis 22, dadurch gekennzeichnet, daß die radiale Erstreckung des Halteringes (13) und die der Haltekralle (17) gegenüber der Innenseite der Klemmfinger (16) etwa gleich groß sind.

24. Klemmring nach einem der Ansprüche 1 bis 23, dadurch gekennzeichnet, daß mehrere Haltevorsprünge (17) oder Haltekrallen in axialer Richtung nebeneinander an den Klemmfingern (16) angeordnet sind, wobei die der Stirnseite der Klemmfinger (16) am nächsten liegende Haltekralle (17) eine radial kürzere Erstreckung als die weiter innenliegende Haltekralle (17) hat, also der Innendurchmesser auf welchem die dem Rand des Klemmrings (7) nähere Haltekralle (17) endet, größer als der der Nachbarkralle (17) ist.

25. Klemmring nach einem der Ansprüche 1 bis 24, dadurch gekennzeichnet, daß der die einzelnen zwischen den Axialschlitzen (12) stehenden Klemmfinger (16) zusammenhaltende Haltering (13) zumindest an seiner der Dichtung (11) zugewandten Seite eine derartige radiale Erstreckung oder Dicke hat, daß er als einstückig mit dem Klemmring (7) verbundener Druckring wirkt oder dient.

26. Klemmring nach einem der Ansprüche 1 bis 25, dadurch gekennzeichnet, daß am Umfang des Klemmringes (7) verteilt vorzugsweise drei bis zwölf Klemmfinger (16) und entsprechend viele Axialschlitze (12) angeordnet sind und daß an der Klemmfinger-Innenseite die Kanten (18) zumindest in der Klemmzone insbesondere gebrochen oder gerundet sind.

27. Klemmring nach einem der Ansprüche 1 bis 26, dadurch gekennzeichnet, daß die am Umfang liegende Breite der Axialschlitze (12) und der Klemmfinger (16) in Ausgangslage vor der Verformung des Klemmringes (7) etwa gleich groß sind.

28. Klemmring nach einem der Ansprüche 1 bis 27, dadurch gekennzeichnet, daß der Klemmring (7) an seinem der konischen Druckfläche (9) zugewandten Rand von seinem größeren Außendurchmesser zu seiner Stirnseite hin gerundet ist.

29. Klemmring nach einem der Ansprüche 1 bis 28, dadurch gekennzeichnet, daß die in der Überwurfmutter oder an einer sich verjüngenden Form anliegende Rundung der Klemmfinger durch eine Hinterschneidung (21) an der Außenseite des Klemmringes (7) über den größten Außendurchmesser wieder auf einen kleineren Außendurchmesser fortgesetzt ist, wobei sich dieser kleinere Außendurchmesser in axialer Richtung bis zum Ende des Klemmringes (7) erstrecken kann, so daß die dem Klemmfinger (16) abgewandte Seite des Klemmringes (7) einen kleineren Außendurchmesser hat.

30. Klemmring nach einem der Ansprüche 1 bis 29, dadurch gekennzeichnet,, daß die Klemmfinger (16) stirnseitig derart abgeschrägt oder sich verjüngend ausgebildet sind, daß die axiale Erstreckung der Klemmfinger (16) am größeren Außendurchmesser geringer als an dem inneren Durchmesser des Klemmringes ist.

31. Klemmring nach einem der Ansprüche 1 bis 30, dadurch gekennzeichnet, daß der Krümmungsradius (23) der in Umfangsrichtung an der Innenseite der einzelnen Klemmfinger (16) verlaufenden Rundung der Klemmfläche eines jeden Klemmfingers (16) kleiner als der Innenradius des Klemmringes (7) in seiner Ausgangsstellung vor dem Verklemmen ist.

32. Klemmring nach einem der Ansprüche 1 bis 31, dadurch gekennzeichnet, daß die axial verlaufenden Schlitze (12) in Ausgangslage des Klemmringes eine sich von außen nach innen verjüngende Querschnittsform haben.

33. Klemmring nach einem der Ansprüche 1 bis 32, dadurch gekennzeichnet, daß einem an der Außenseite der Klemmfinger (16) zu ihrer Verbindung umlaufenden Haltering (13) in axialer Richtung an den Klemmfingern (16) eine Durchmesserverkleinerung (25a) benachbart ist.

34. Klemmring nach einem der vorstehenden Ansprüche, dadurch gekennzeichnet, daß der als Haltekralle (17) dienende Vorsprung an der Innenseite der Klemmfinger (16) des Klemmringes (7) gerundet oder eckig ausgeführt ist.

35. Klemmring nach einem der vorstehenden Ansprüche, dadurch gekennzeichnet, daß die Haltekralle (17) eine oder mehrere Schneidkanten (17b) haben, welche scharfkantig, abgeflacht oder leicht gerundet sind.

36. Klemmring nach einem der vorstehenden Ansprüche, dadurch gekennzeichnet, daß bei mehreren Schneidkanten (17b) die axiale Erstreckung zwischen den Schneidkanten (17b) auf der Innenseite der Klemmfinger (16) geradlinig oder konkav gekrümmt verläuft.

## Claims

1. A method of producing a clamping ring which has a plurality of axial slots distributed over the periphery and serves for a threaded clamp for elongated objects, especially for pipes, cables, hoses or the like, which threaded clamp has a threaded sleeve or union nut fitting on a companion thread of a companion component, for example a threaded nipple or threaded connecting piece, and further has the clamping ring made of metal or hard plastic adapted to be pressed by the threaded clamp against the elongated object, characterized in that in the region of the end face of a section rod, section tube or section blank having axially extending grooves, the axial ribs composed by the longitudinal grooves are made into separate clamping fingers by boring, milling or internal turning over a portion of the axial expanse of the clamping ring and in the radial direction beyond the groove base.

2. A method as claimed in claim 1, characterized in that section blank, section rod or section tube axially ribbed through longitudinal grooves is provided with an inside cavity, that the inside cavity is enlarged over part of the length over which the clamping ring to be produced extends and is enlarged beyond the groove base in such a way that in this area the ribs are separated from one another at least over part of their length by a gap, and that axially adjacent to said gaps a holding ring, particularly one of smaller diameter, is left and the clamping ring is parted off the section blank, section rod or section tube in the area of said holding ring.

3. A method as claimed in claim I or claim 2, characterized in that the ribs or clamping fingers separated from one another are deformed radially inwardly and internally turned or milled to the nominal diameter.

4. A method as claimed in any one of claims 1 to 3, characterized in that an externally ribbed section blank, section rod or section tube is preferably rotary driven about its longitudinal axis, its centre is bored from the end face or is milled out and locally internally turned, until between the ribs gaps separating them from one another over part of their length become free, and the inside diameter of the clamping fingers in the front area thereof approximately corresponds to the inside diameter of the holding ring, that then the front area between the ribs is broached over an axial length smaller than the width of the clamping ring and in particular is rounded at the radially internal edges of the fingers, and that the clamping ring is then cut off in the rear area of the holding ring left standing.

5. A method as claimed in any one of claims 1 to 4, characterized in that the section (20) is bored and a middle area of the clamping fingers (16) is then internally turned and areas of smaller diameter located at the end face are left and are relieved and that the relieved ring areas of smaller inside diameter are then broached between the clamping fingers (16).

6. A method as claimed in any one of claims 1 to 5, characterized in that the preferably rotating section rod (20) is internally turned and the ribs (19) are separated from one another over part of their length, are then deformed radially inwardly from their end face and in the deformed position are internally turned again to a reduced diameter, are then enlarged and that then the clamping ring (7) is cut off in the area of the holding ring (13) left standing.

7. A method as claimed in any one of claims 1 to 6, characterized in that the section rod (20) is bored and internally turned over a length greater than a clamping ring (7) is wide, and that several broaching and cutting off steps are repeated and then the section rod (20) is bored further.

8. A method of producing a clamping ring which has a plurality of axial slots distributed over the periphery and serves for a threaded clamp, as claimed in any one of claims 1 to 7, characterized in that a tube having radially internal ribs extending in the axial direction is rotated about its central axis and is turned at the outside until the internal ribs are separated from one another over part of the axial area and that then the holding ring axially remote from the front face is cut off.

9. A method as claimed in any one of claims 1 to 8, characterized in that the axially free ends of the ribs (19) of the section rod (20) are chamfered and/or rounded at least before a clamping ring (7) is cut off, particularly before or after the internal turning and/or before or after the boring.

10. A method of producing a clamping ring having an axial slot continuous in the axial and radial direction, as claimed in any one of claims 1 to 9, characterized in that a section blank, section rod (20) or section tube having an axial groove of particularly at least 3 to 4 mm width and of a depth extending at least to the inside diameter of the clamping ring (7) to be produced is preferably set into rotary motion and the groove is opened to form a continuous clamping slot (8) by boring and/or turning and/or milling and then the clamping ring (7) is cut off a section rod (20) or section tube.

11. A clamping ring produced according to the method as claimed in any one of claims 1 to 10, characterized in that said ring from an axially ribbed section blank or parted off an axially ribbed section rod (20) or section tube is hollowed in such a way that the ribs (19) compose the clamping fingers (16) separated by gaps or slots.

12. A clamping ring as claimed in claim 11, characterized in that distributed over the periphery of the clamping ring there are axially extending flutes, indentations, grooves or the like provided as profiling, opening radially towards the centre of the ring or particularly at the outside of the ring.

13. A clamping ring as claimed in claim 11 or claim 12, characterized in that the slots (12) are continuous in the axial direction and a holding ring (13) bridges at least areas of the slots extending throughout its axial width.

14. A clamping ring as claimed in any one of claims 11 to 13, characterized in that the slot base at the holding ring (13) extends axially and that the face (13a) of the holding ring (13) facing the slot (12) is angularly disposed thereto in cross section.

15. A clamping ring as claimed in any one of claims 11 to 14, characterized in that the holding ring (13) leaves an axially and also radially continuous slot (8) free.

16. A clamping ring as claimed in any one of claims 11 to 15, characterized in that the thin holding ring (13) bridging the slots is readily deformable and is integrally connected to the clamping fingers (16) it holds together and thereby all the clamping fingers (16) of the clamping ring (7) are interconnected.

17. A clamping ring as claimed in any one of claims 11 to 16, characterized in that the holding ring (13) holding together the clamping fingers (16) formed at the periphery between the individual axial slots (12) of the clamping ring (7) is arranged at the inside or at the outside of the clamping ring (7).

18. A clamping ring as claimed in any one of claims 11 to 17, characterized in that the holding ring (13) is foldable, in particularly is prefolded, in the area between the clamping fingers (16), hence within the slots (12), and may extend throughout the axial area of the clamping ring (7).

19. A clamping ring as claimed in any one of claims 1 to 18, characterized in that the axial size of the holding ring(s) (13) is smaller than that of the entire clamping ring (7) and clamping fingers (16) thereof.

20. A clamping ring as claimed in any one of claims I to 19, characterized in that the holding ring (13) runs round the clamping fingers so as to be proud of their inside or possibly proud of their outside.

21. A clamping ring as claimed in any one of claims 1 to 20, characterized in that the holding ring (13) is arranged at an end area of the clamping fingers (16), particularly at that end area of the clamping fingers (16) which is averted from the tapering contact surface (9) in the position of use.

22. A clamping ring as claimed in any one of claims 1 to 21, characterized in that the clamping fingers (16) have at their end area opposite the holding ring (13) at least one internal, cornered or rounded projection directed radially inwardly as a claw (17).

23. A clamping ring as claimed in any one of claims 1 to 22, characterized in that the radial extension of the holding ring (13) and that of the claw (17) is of approximately the same size relative to the inside of the clamping fingers (16).

24. A clamping ring as claimed in any one of claims 1 to 23, characterized in that a plurality of holding projections (17) or claws are arranged in the axial direction, side by side, on the clamping fingers (16), whereby the claw closest to the end face of the clamping fingers (16) has a radially shorter extension than the claw (17) further within, hence the inside diameter at which the claw (17) closer to the edge of the clamping ring (7) ends is larger than that of the neighbouring claw (17).

25. A clamping ring as claimed in any one of claims 1 to 24, characterized in that the holding ring (13) holding together the individual clamping fingers (16) situated between the axial slots (12) has a radial extension or thickness, at least at its side facing the seal (11), such that it serves or acts as a pressing ring integrally connected to the clamping ring (7).

26. A clamping ring as claimed in any one of claims 1 to 25, characterized in that preferably three to twelve clamping fingers (16) and a corresponding number of axial slots (12) are distributed over the periphery of the clamping ring (7) and that at the inside of the clamping fingers the edges (18) are in particular chamfered or rounded, at least in the clamping zone.

27. A clamping ring as claimed in any one of claims 1 to 26, characterized in that the axial slots (12) and the clamping fingers (16) are of about the same width at the periphery in the initial position, before the clamping ring (7) is deformed.

28. A clamping ring as claimed in any one of claims 1 to 27, characterized in that at that edge of the clamping ring (7) which faces the conical contact surface, said clamping ring (7) is rounded from its larger outside diameter to its end face.

29. A clamping ring as claimed in any one of claims 1 to 28, characterized in that the curvature of the clamping fingers contacting the union nut or bearing against a tapering shape is continued by an undercut (21) at the outside of the clamping ring (7) over the largest outside diameter to a smaller outside diameter, whereby said smaller outside diameter may extend in the axial direction to the end of the clamping ring (7), so that that side of the clamping ring (7) which is averted from the clamping fingers (16) has a smaller outside diameter.

30. A clamping ring as claimed in any one of claims 1 to 29, characterized in that the end faces of the clamping fingers (16) are chamfered or tapered in such a way that the axial expanse of the clamping fingers (16) at the larger outside diameter is smaller than at the inside diameter of the clamping ring.

31. A clamping ring as claimed in any one of claims 1 to 30, characterized in that the clamping surface at the inside of each clamping finger (16) has a curvature extending in the circumferential direction with a radius of curvature (23) smaller than the inside radius of the clamping ring (7) in its initial position prior to clamping.

32. A clamping ring as claimed in any one of claims 1 to 31, characterized in that in the initial position of the clamping ring the axial slots (12) have a crosssectional shape tapering from the outside to the inside.

33. A clamping ring as claimed in any one of claims 1 to 32, characterized in that a reduction in diameter (25a) of the clamping fingers (16) is axially adjacent to a holding ring (13) running round their outside to connect them.

34. A clamping ring as claimed in any one of the preceding claims, characterized in that the projection serving as claw (17) at the inside of the clamping fingers (16) of the clamping ring (7) is rounded or cornered.

35. A clamping ring as claimed in any one of the preceding claims, characterized in that the claws (17) have one or several cutting edges (17b) which are sharp-edged, flattened or slightly rounded.

36. A clamping ring as claimed in any one of the preceding claims, characterized in that in the case of several cutting edges (17b), the axial expanse between the cutting edges (17b) on the inside of the clamping fingers (16) takes a straight-lined course or one of concave curvature.

## Revendications

1. Procédé de fabrication d'une bague de serrage, présentant plusieurs fentes axiales réparties sur sa circonférence, pour un raccord vissé avec serrage pour des corps oblongs, en particulier pour des tubes, câbles, tuyaux souples ou analogues, ce raccord vissé présentant un manchon fileté ou écrou-raccord adapté au filetage complémentaire d'un contre-élément, par exemple d'un nipple ou d'une tubulure filetée, et la bague de serrage en métal ou plastique dur qui peut être pressée en application contre le corps oblong lors du vissage, **caractérisé** en ce que, sur une barre profilée, un tube profilé ou une pièce brute profilée présentant des rainures s'étendant axialement, les nervures s'étendant axialement formées par les rainures longitudinales sont, en perçant, évidant au tour ou à la fraise ladite pièce dans la région de son côté frontal, sur une partie de l'étendue axiale de la bague de serrage et au-delà du fond des rainures en direction radiale, formées en doigts de serrage séparés les uns des autres.

2. Procédé selon la revendication 1, **caractérisé** en ce qu'on dote d'un évidement intérieur une pièce brute profilée, barre profilée ou tube profilé qui présente sur sa longueur axiale des nervures formées par des rainures longitudinales, en ce que l'évidement intérieur est, sur une partie de l'étendue longitudinale de la bague de serrage à fabriquer, élargi au-delà du fond des rainures de telle sorte que les nervures sont dans cette région, au moins sur une partie de leur longueur, séparées les unes des autres par un espace intermédiaire et qu'on laisse présent un anneau de support, notamment de plus petit diamètre, voisin en direction axiale de ces espaces intermédiaires, et la bague de serrage est détachée, dans la région de cet anneau, de la pièce brute profilée, barre profilée ou tube profilé.

3. Procédé selon la revendication 1 ou 2, **caractérisé** en ce que les nervures ou doigts de serrage séparés les uns des autres sont déformés radialement vers l'intérieur et fraisés ou évidés au tour au diamètre nominal.

4. Procédé selon l'une des revendications 1 à 3, **caractérisé** en ce qu'une pièce brute profilée, barre profilée ou tube profilé pourvu(e) de nervures extérieures est de préférence entraîné(e) en rotation autour de son axe longitudinal, son centre est percé ou évidé à la fraise depuis le côté frontal, et évidé au tour sur une région jusqu'à ce que soient dégagés entre les nervures des espaces intermédiaires séparant les nervures les unes des autres sur une partie de leur longueur, et que le diamètre intérieur des doigts de serrage dans leur région avant corresponde approximativement au diamètre de l'anneau de support, en ce que la région avant est ensuite brochée entre les nervures sur une longueur axiale inférieure à la largeur de la bague de serrage, et notamment arrondie sur les arêtes intérieures, en direction radiale, des doigts, et en ce que la bague de serrage est enfin tronçonnée dans la région arrière de l'anneau de support laissé présent.

5. Procédé selon l'une des revendications 1 à 4, **caractérisé** en ce que le profilé (20) est percé et une région médiane des doigts de serrage (16) est ensuite évidée au tour, des régions de plus petit diamètre étant alors laissées présentes sur le côté frontal et détalonnées, et en ce que les régions annulaires détalonnées de plus petit diamètre sont ensuite brochées entre les doigts de serrage (16).

6. Procédé selon l'une des revendications 1 à 5, **caractérisé** en ce que la barre profilée (20) de préférence rotative est évidée au tour et les nervures (19) sont notamment séparées les unes des autres sur une partie de leur longueur, puis déformées radialement vers l'intérieur depuis leur côté frontal et à nouveau évidées au tour dans la position déformée, mais cette fois plus petitement, et ensuite évasées, et en ce que la bague de serrage (7) est enfin tronçonnée dans la région de l'anneau de support (13) laissé présent.

7. Procédé selon l'une des revendications 1 à 6, **caractérisé** en ce que la barre profilée (20) est percée et évidée au tour sur une longueur supérieure à la largeur d'une bague de serrage (7), et en ce qu'on répète plusieurs opérations de brochage et de tronçonnage, et la barre profilée (20) est ensuite encore plus évidée au tour.

8. Procédé de fabrication d'une bague de serrage présentant plusieurs fentes axiales réparties sur sa circonférence, pour un raccord vissé avec serrage selon l'une des revendications 1 à 7, **caractérisé** en ce qu'un tube s'étendant en direction axiale et présentant des nervures radialement intérieures est mis en rotation autour de son axe et usiné au tour sur le côté extérieur jusqu'à ce que les nervures intérieures soient séparées les unes des autres sur une région partielle axiale, et en ce que l'anneau de support, éloigné en direction axiale du côté frontal avant, est ensuite tronçonné.

9. Procédé selon l'une des revendications 1 à 8, **caractérisé** en ce que les extrémités axialement libres des nervures (19) de la barre profilée (20) sont chanfreinées et/ou arrondies au moins avant le tronçonnage d'une bague de serrage (7), notamment avant ou après l'évidage au tour et/ou avant ou après le perçage.

10. Procédé de fabrication d'une bague de serrage présentant une fente axiale débouchante en direction axiale et radiale, selon l'une des revendications 1 à 9, **caractérisé** en ce qu'une pièce brute profilée, barre profilée (20) ou tube profilé, présentant une rainure axiale de notamment au moins 3 à 4 mm de largeur et une profondeur de rainure atteignant au moins le diamètre intérieur de la bague de serrage (7) à fabriquer, est de préférence mis en un mouvement de rotation et la rainure est ouverte en une fente de serrage débouchante (8) par perçage et/ou usinage au tour et/ou usinage à la fraise, et la bague de serrage (7) est ensuite détachée par tronçonnage d'une barre profilée (20) ou d'un tube profilé.

11. Bague de serrage fabriquée d'après le procédé selon l'une des revendications 1 à 10, **caractérisée** en ce qu'en étant détachée d'une pièce brute profilée présentant des nervures axiales ou d'une barre profilée (20) ou d'un tube profilé présentant des nervures axiales, elle est évidée de telle sorte que les nervures (19) forment les doigts de serrage (16) séparés par des espaces intermédiaires ou fentes.

12. Bague de serrage selon la revendication 11, **caractérisée** en ce que sont prévues comme profilage des cannelures, entailles, rainures ou analogues réparties sur la circonférence de la bague de serrage, s'étendant en direction axiale et s'ouvrant radialement vers le milieu de la bague ou notamment sur le côté extérieur de la bague.

13. Bague de serrage selon la revendication 11 ou 12, **caractérisée** en ce que les fentes (12) sont réalisées débouchantes en direction axiale, et un anneau de support (13) comble au moins sur une région les fentes qui s'étendent sur toute sa largeur axiale.

14. Bague de serrage selon l'une des revendications 11 à 13, **caractérisée** en ce que le fond de la fente sur l'anneau de support (13) s'étend axialement, et en ce que le côté frontal (13a) de l'anneau de support (13) qui est tourné vers la fente (12) est disposé, en coupe transversale, en angle par rapport à ce fond.

15. Bague de serrage selon l'une des revendications 11 à 14, **caractérisée** en ce que l'anneau de support (13) laisse ouverte une fente (8) axialement et également radialement débouchante.

16. Bague de serrage selon l'une des revendications 11 à 15, **caractérisée** en ce que le mince anneau de support (13) comblant les fentes est réalisé aisément déformable et est solidaire des doigts de serrage (16) qu'il maintient assemblés, de sorte que tous les doigts de serrage (16) de la bague de serrage (7) sont solidarisés.

17. Bague de serrage selon l'une des revendications 11 à 16, **caractérisée** en ce que l'anneau de support (13), maintenant assemblés les doigts de serrage (16) de la bague de serrage (7) formés sur la circonférence entre les fentes axiales individuelles (12), est disposé sur le côté intérieur ou sur le côté extérieur de la bague de serrage (7).

18. Bague de serrage selon l'une des revendications 11 à 17, **caractérisée** en ce que l'anneau de support (13) peut être plié dans la région située entre les doigts de serrage (16), donc à l'intérieur des fentes (12), notamment est pré-plié, et il s'étend éventuellement sur toute l'étendue axiale de la bague de serrage (7).

19. Bague de serrage selon l'une des revendications 1 à 18, **caractérisée** en ce que la dimension axiale du ou des anneaux de support (13) est inférieure à celle de l'ensemble de la bague de serrage (7) et de ses doigts de serrage (16).

20. Bague de serrage selon l'une des revendications 1 à 19, **caractérisée** en ce que l'anneau de support (13) est entourant en saillie par rapport au côté intérieur ou, le cas échéant, extérieur des doigts de serrage.

21. Bague de serrage selon l'une des revendications 1 à 20, **caractérisée** en ce que l'anneau de support (13) est disposé sur une région terminale des doigts de serrage (16), notamment sur la région terminale des doigts de serrage (16) qui, en position d'utilisation, est opposée à la face de pression (9) allant en se rétrécissant.

22. Bague de serrage selon l'une des revendications 1 à 21, **caractérisée** en ce que les doigts de serrage (16) possèdent sur leur région terminale opposée à l'anneau de support (13), sur leur côté intérieur, au moins une saillie angulaire ou arrondie, dirigée radialement vers l'intérieur, qui sert de griffe de maintien (17).

23. Bague de serrage selon l'une des revendications 1 à 22, **caractérisée** en ce que l'étendue radiale de l'anneau de support (13) et celle de la griffe de maintien (17) par rapport au côté intérieur des doigts de serrage (16) sont approximativement identiques.

24. Bague de serrage selon l'une des revendications 1 à 23, **caractérisée** en ce que plusieurs saillies de maintien (17) ou griffes de maintien sont disposées les unes à côté des autres en direction axiale sur les doigts de serrage (16), la griffe de maintien (17) la plus proche du côté frontal des doigts de serrage (16) possédant une étendue radiale plus courte que la griffe de maintien (17) plus éloignée, c'est-à-dire que le diamètre intérieur sur lequel se termine la griffe de maintien (17) la plus proche du bord de la bague de serrage (7), est plus grand que celui de la griffe de maintien (17) voisine.

25. Bague de serrage selon l'une des revendications 1 à 24, **caractérisée** en ce que l'anneau de support (13) maintenant assemblés les doigts de serrage individuels (16) présents entre les fentes axiales (12) possède, au moins sur son côté tourné vers le joint d'étanchéité (11), une étendue radiale ou épaisseur telle qu'il agit comme ou sert de bague de pression solidairement assemblée à la bague de serrage (7).

26. Bague de serrage selon l'une des revendications 1 à 25, **caractérisée** en ce que, trois à douze doigts de serrage (16) de préférence, et un nombre correspondant -de fentes axiales (12), sont répartis sur la circonférence de la bague de serrage (7), et en ce que, sur le côté intérieur des doigts de serrage, les arêtes (18) sont, au moins dans la zone de serrage, notamment brisées et/ou arrondies.

27. Bague de serrage selon l'une des revendications 1 à 26, **caractérisée** en ce que la largeur située sur la circonférence des fentes axiales (12) et celle des doigts de serrage (16) sont, en position initiale avant la déformation de la bague de serrage (7), approximativement identiques.

28. Bague de serrage selon l'une des revendications 1 à 27, **caractérisée** en ce que la bague de serrage (7) est, sur son bord tourné vers la face de pression conique (9), arrondie depuis son plus grand diamètre extérieur en direction de son côté frontal.

29. Bague de serrage selon l'une des revendications 1 à 28, **caractérisée** en ce que l'arrondi des doigts de serrage, qui s'applique dans l'écrou-raccord ou contre un profil allant en se rétrécissant, est, par une contre-dépouille (21) sur le côté extérieur de la bague de serrage (7), ramené du plus grand diamètre extérieur à un diamètre extérieur plus petit, ce diamètre extérieur plus petit pouvant s'étendre en direction axiale jusqu'à l'extrémité de la bague de serrage (7), de sorte que le côté de la bague de serrage (7) qui est opposé aux doigts de serrage (16) possède un plus petit diamètre extérieur.

30. Bague de serrage selon l'une des revendications 1 à 29, **caractérisée** en ce que les doigts de serrage (16) sont, sur leur côté frontal, chanfreinés ou configurés en se rétrécissant de telle sorte que l'étendue axiale des doigts de serrage (16) est plus petite sur le plus grand diamètre extérieur que sur le diamètre intérieur de la bague de serrage.

31. Bague de serrage selon l'une des revendications 1 à 30, **caractérisée** en ce que le rayon de courbure (23) de l'arrondi de la face de serrage de chaque doigt de serrage (16), arrondi qui s'étend en direction circonférentielle sur le côté intérieur des doigts de serrage individuels (16), est inférieur au rayon intérieur de la bague de serrage (7) dans sa position initiale avant l'assemblage avec serrage.

32. Bague de serrage selon l'une des revendications 1 à 31, **caractérisée** en ce que les fentes s'étendant axialement (12) possèdent, dans la position initiale de la bague de serrage, une forme de section allant en se rétrécissant de l'extérieur vers l'intérieur.

33. Bague de serrage selon l'une des revendications 1 à 32, **caractérisée** en ce qu'un rétrécissement de diamètre (25a) est voisin en direction axiale, sur les doigts de serrage (16), d'un anneau de support (13) entourant sur le côté extérieur des doigts de serrage (16) afin de les maintenir assemblés.

34. Bague de serrage selon l'une des revendications précédentes, **caractérisée** en ce que la saillie sur le côté intérieur des doigts de serrage (16) de la bague de serrage (7), saillie qui sert de griffe de maintien (17), est réalisée angulaire ou arrondie.

35. Bague de serrage selon l'une des revendications précédentes, **caractérisée** en ce que les griffes de maintien (17) possèdent un ou plusieurs tranchants (17b) qui sont anguleux, aplatis ou légèrement arrondis.

36. Bague de serrage selon l'une des revendications précédentes, **caractérisée** en ce qu'en présence de plusieurs tranchants (17b), l'étendue axiale entre les tranchants (17b) sur le côté intérieur des doigts de serrage (16) a une allure rectiligne ou à courbure concave.
